# EUROPÄISCHE PATENTSCHRIFT

(11) **EP 2 895 517 B1**
(45) Veröffentlichungstag und Bekanntmachung des Hinweises auf die Patenterteilung: **16.12.2020**
(21) Anmeldenummer: 13763207.1
(22) Anmeldetag: 06.09.2013
(51) Int. Cl.: C08G 18/10, C08G 18/12, C08G 18/22, C08G 18/32, C09D 175/04, C09J 175/04

(54) **ZWEIKOMPONENTIGE POLYURETHANZUSAMMENSETZUNG**
TWO-COMPONENT POLYURETHANE COMPOSITION
COMPOSITION DE POLYURÉTHANE À DEUX COMPOSANTS

(30) Priorität: 11.09.2012 EP 12183891
(43) Veröffentlichungstag der Anmeldung: 22.07.2015
(73) Patentinhaber: Sika Technology AG, 6340 Baar (CH)
(72) Erfinder: BURCKHARDT, Urs, CH-8049 Zürich (CH); KELCH, Steffen, CH-8102 Oberengstringen (CH); CANNAS, Rita, CH-8600 Dübendorf (CH)
(74) Vertreter: Sika Patent Attorneys
(86) Internationale Anmeldenummer: PCT/EP2013/068490
(87) Internationale Veröffentlichungsnummer: WO 2014/040922

(56) Entgegenhaltungen:
- EP-A1- 1 975 189
- US-A- 5 603 798

## Beschreibung

### Technisches Gebiet

Die Erfindung betrifft das Gebiet der härtbaren Polyurethanzusammensetzungen und ihre Verwendung, insbesondere als Klebstoff, Dichtstoff und Beschichtung.

### Stand der Technik

Härtbare Polyurethanzusammensetzungen werden breit eingesetzt, unter anderem für elastische Verklebungen, Abdichtungen und Beschichtungen. Zweikomponentige Systeme bieten dabei im Vergleich zu einkomponentigen Systemen den Vorteil, rasch Festigkeit aufzubauen und in ihren Gebrauchseigenschaften ein breiteres Spektrum an mechanischen Eigenschaften abzudecken, von viskoelastisch bis zu hochstrukturell. Zweikomponentige Systeme bestehend aus einer Polyol- und einer Isocyanatkomponente weisen die Schwierigkeit auf, dass ihre Aushärtung durch Feuchtigkeit erheblich gestört werden kann, was oft zu einer ungenügenden Festigkeit führt. Durch Mitverwendung von Polyaminen in der Polyolkomponente sind die Systeme bei der Aushärtung weniger anfällig auf Störungen durch Feuchtigkeit, erreichen höhere Früh- und Endfestigkeiten und zeigen eine erhöhte Beständigkeit. Allerdings weisen sie aufgrund der schnellen Reaktion zwischen Amino- und Isocyanatgruppen oft nur eine kurze Offenzeit auf, was sie für viele Anwendungen ungeeignet macht. Systeme mit genügend langer Offenzeit werden im allgemeinen nur mit gegenüber Isocyanaten langsam reagierenden Polyaminen, die sterisch gehinderte und/oder elektronisch deaktivierte Aminogruppen aufweisen, erhalten. Um eine einfache und lösemittelfreie Einarbeitung zu ermöglichen, ist es ausserdem vorteilhaft, wenn das Polyamin bei Raumtemperatur flüssig ist. Mit diesen Bedingungen engt sich die Auswahl auf wenige technisch erhältliche Polyamine ein, die teuer und aufgrund ihres aromatischen Charakters toxisch sind.

Anstelle von Polyaminen können prinzipiell auch Verbindungen mit blockierten, hydrolytisch aktivierbaren Aminogruppen, sogenannte blockierte Amine oder latente Härter, verwendet werden, beispielsweise Oxazolidine oder Aldimine, wie sie aus einkomponentigen Polyurethanzusammensetzungen bekannt sind. Solche blockierten Amine sind bei Raumtemperatur oft flüssig, auch wenn sie auf festen Polyaminen basieren, und reagieren wegen den verzögert freigesetzten Aminogruppen langsamer mit Isocyanaten. Ihr Einsatz in zweikomponentigen Polyurethanen bringt aber die Schwierigkeit mit sich, dass die Aktivierung der blockierten Aminogruppen und die Reaktion der OH-Gruppen mit Isocyanaten in geeigneter Weise aufeinander abgestimmt sein müssen, damit die Aushärtung störungsfrei, insbesondere ohne Blasenbildung, abläuft und das entstehende Polymer in Bezug auf seine Festigkeit aus dem blockierten Amin Nutzen ziehen kann.

Zweikomponentige Polyurethanzusammensetzungen, welche blockierte Amine enthalten, sind bekannt. In DE 4006537 sind zweikomponentige Klebstoffe enthaltend Polyazomethine, insbesondere Polyketimine, beschrieben, welche auch Polyole enthalten können. Die erreichten Festigkeiten sind aber nicht sehr hoch. In EP 2'139'936 sind unter anderem zweikomponentige elastische Klebstoffe offenbart, welche in der Polyolkomponente ein Dialdimin enthalten. Diese härten aber nicht ungestört aus, neigen zur Blasenbildung und entwickeln eine vergleichsweise geringe Festigkeit.

### Darstellung der Erfindung

Aufgabe der vorliegenden Erfindung ist es daher, eine zweikomponentige Polyurethanzusammensetzung zur Verfügung zu stellen, welche eine lange Offenzeit aufweist und blasenfrei zu einem elastischen Material von hoher Festigkeit aushärtet.

Überraschenderweise wurde gefunden, dass eine Zusammensetzung nach Anspruch 1 diese Aufgabe löst. Ihre Offenzeit ist vergleichsweise lange und durch Variation der Inhaltsstoffe gut einstellbar. Die Aushärtung verläuft weitgehend blasenfrei, auch unter ungünstigen klimatischen Bedingungen wie hoher Temperatur und/oder hoher Luftfeuchtigkeit, wobei überraschend schnell sehr hohe Festigkeiten entstehen, deutlich höhere Festigkeiten als im Stand der Technik für zweikomponentige Zusammensetzungen üblich. Besonders überraschend ist dabei der Umstand, dass die Endfestigkeiten der Zusammensetzung nach Anspruch 1 deutlich höher liegen als bei entsprechenden Zusammensetzungen, welche anstelle von Bismut(III)- oder Zirkonium(IV)-Verbindungen andere in der Polyurethanchemie übliche und/oder ähnlich wirkende Katalysatoren wie tertiäre Amine, Dialkylzinn(IV)-Verbindungen, Zinn(II)-Verbindungen, Zink(II)-Verbindungen oder Titan(IV)-Verbindungen enthalten. Es kann vermutet werden, dass dank der Anwesenheit der Bismut(III)- oder Zirkonium(IV)-Katalysatoren das dem blockierten Amin zugrunde liegende Amin so gut ins aushärtende Polyurethanpolymer eingebaut wird, dass es wesentlich zur Verstärkung des Polymers beiträgt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus einer ersten und einer zweiten Komponente,
- wobei die erste Komponente mindestens ein Polyol und
- die zweite Komponente mindestens ein Polyisocyanat enthält,
- und wobei die Zusammensetzung weiterhin mindestens ein blockiertes Amin **Z,** welches eine Oxazolidinogruppe oder eine Aldiminogruppe sowie mindestens eine weitere Reaktivgruppe ausgewählt aus der Gruppe bestehend aus Oxazolidinogruppen, Aldiminogruppen, Hydroxylgruppen, Mercaptogruppen, primären Aminogruppen, sekundären Aminogruppen und Isocyanatgruppen aufweist,
- und die Zusammensetzung weiterhin mindestens einen Katalysator **K** ausgewählt aus der Gruppe bestehend aus Bismut(III)-Verbindungen und Zirkonium(IV)-Verbindungen umfasst.

Mit "Poly" beginnende Substanznamen wie Polyol, Polyisocyanat oder Polyamin bezeichnen Substanzen, die formal zwei oder mehr der in ihrem Namen vorkommenden funktionellen Gruppen pro Molekül enthalten.

Der Begriff "Polyisocyanat" umfasst im vorliegenden Dokument Verbindungen mit zwei oder mehr Isocyanatgruppen, unabhängig davon, ob es sich dabei um monomere Diisocyanate, oligomere Polyisocyanate oder Isocyanatgruppen aufweisende Polymere mit einem relativ hohen Molekulargewicht handelt.

Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.

Als "Oxazolidinogruppe" werden im vorliegenden Dokument sowohl Tetrahydrooxazol-Gruppen (5-Ring) als auch Tetrahydrooxazin-Gruppen (6-Ring) bezeichnet.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Als "primäre Hydroxylgruppe" wird eine OH-Gruppe bezeichnet, welche an ein C-Atom mit zwei Wasserstoffen gebunden ist.

Als "aliphatisch" wird ein Amin bzw. ein Isocyanat bezeichnet, dessen Amino- bzw. Isocyanatgruppe an einen aliphatischen, cycloaliphatischen oder arylaliphatischen Rest gebunden ist; entsprechend wird diese Gruppe als aliphatische Amino- bzw. Isocyanatgruppe bezeichnet.

Als "aromatisch" wird ein Amin bzw. ein Isocyanat bezeichnet, dessen Amino- bzw. Isocyanatgruppe an einen aromatischen Rest gebunden ist; entsprechend wird diese Gruppe als aromatische Amino- bzw. Isocyanatgruppe bezeichnet. Als "Offenzeit" wird in diesem Dokument die Zeit bezeichnet, während der die Zusammensetzung verarbeitet werden kann, nachdem die erste und die zweite Komponente miteinander vermischt wurden.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul) im Dehnungsbereich bis 50% gemeint sind.

Als "Raumtemperatur" wird im vorliegenden Dokument eine Temperatur von 23 °C bezeichnet.

Der Begriff "lagerstabil" bezeichnet die Eigenschaft einer Zusammensetzung, dass sie in einem geeigneten Gebinde während mehreren Wochen bis einige Monate bei Raumtemperatur aufbewahrt werden kann, ohne dass sie sich in ihren Anwendungs- oder Gebrauchseigenschaften durch die Lagerung wesentlich verändert.

Geeignete Polyole als Bestandteil der ersten Komponente sind insbesondere die folgenden handelsüblichen Polyole oder Mischungen davon:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Speziell geeignet sind sogenannte Ethylenoxid-terminierte ("EO-endcapped", ethylene oxide-endcapped) Polyoxypropylenpolyole. Letztere sind spezielle Polyoxypropylen-polyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 500 - 20'000 g/mol und eine mittlere OH-Funktionalität im Bereich von 1.6 bis 4 auf.

Als Bestandteil der ersten Komponente bevorzugte Polyole sind Polyetherpolyole, insbesondere Polyoxypropylenpolyole und Polyoxyethylen-polyoxypropylen-Mischpolyole, sowie Polyesterpolyole und Polycarbonatpolyole. Besonders bevorzugt sind die Polyetherpolyole, insbesondere die Polyoxyethylen-polyoxypropylen-Mischpolyole.
Bevorzugt weist das Polyol ein mittleres Molekulargewicht von 500 - 20'000 g/mol, besonders bevorzugt von 1'000 - 10'000 g/mol, insbesondere von 3'000 bis 8'000 g/mol, auf.
Besonders bevorzugt weist das Polyol eine mittlere Funktionalität von 1.6 bis 3, besonders bevorzugt von 1.8 bis 3, insbesondere von 2.2 bis 3, auf.

Bevorzugt weist das Polyol primäre Hydroxylgruppen auf. Primäre Hydroxylgruppen sind mit Isocyanaten besonders reaktiv.

Das Polyol ist bevorzugt in einer Menge von 10 bis 90 Gewichts-%, bevorzugt 20 bis 80 Gewichts-%, bezogen auf das Gesamtgewicht der ersten Komponente vorhanden.

Geeignete Polyisocyanate als Bestandteil der zweiten Komponente sind insbesondere monomere Di- oder Triisocyanate, sowie Oligomere, Polymere und Derivate der monomeren Di- oder Triisocyanaten, sowie beliebige Mischungen davon.
Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.
Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und α,α,α',α',α",α"-Hexamethyl-1,3,5-mesitylentriisocyanat. Davon bevorzugt sind MDI, TDI, HDI und IPDI.
Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Geeignete Polyisocyanate als Bestandteil der zweiten Komponente sind wieterhin insbesondere Isocyanatgruppen aufweisende Polyurethanpolymere, erhältlich durch die Umsetzung von mindestens einem Polyol mit mindestens einem Polyisocyanat, wobei als Polyol die bereits als Bestandteil der ersten Komponente genannten Polyole und als Polyisocyanat die bereits genannten monomeren Di- oder Triisocyante geeignet sind, insbesondere MDI, TDI, IPDI und HDI. Bevorzugte Polyole sind Polyether-, Polyester-, Polycarbonat- und Polyacrylatpolyole, insbesondere die Di- und Triole. Davon besonders bevorzugt sind Polyetherpolyole, insbesondere Polyoxypropylenpolyole und Polyoxypropylen-polyoxyethylen-polyole, sowie bei Raumtemperatur flüssige Polyesterpolyole und Polyetherpolyesterpolyole.
Die Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind und wobei das nach der Umsetzung verbleibende überschüssige Polyisocyanat-Monomer gegebenenfalls ganz oder teilweise entfernt wird, beispielsweise durch Destillation oder Extraktion. Vorteilhaft ist das Polyisocyanat so dosiert, dass ein NCO/OH-Verhältnis von 1.3 bis 20, insbesondere 1.5 bis 10, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden.
Bevorzugt verbleibt im Isocyanatgruppen aufweisenden Polyurethanpolymer nach Umsetzung aller Hydroxylgruppen ein Gehalt an freien Isocyanatgruppen von 0.5 bis 30, insbesondere 1 bis 25, Gewichts-%.
Gegebenenfalls kann das Isocyanatgruppen aufweisende Polyurethanpolymer unter Mitverwendung von Weichmachern hergestellt werden, wobei die verwendeten Weichmacher keine gegenüber Isocyanaten reaktive Gruppen enthalten.

Bevorzugt ist das Polyisocyanat ausgewählt aus der Gruppe bestehend aus MDI, TDI, HDI und IPDI, Oligomere, Polymere und Derivate der genannten Isocyanate und auf den genannten Isocyanaten basierende Isocyanatgruppen aufweisenden Polyurethanpolymere, sowie Mischungen davon.
Bevorzugt enthält das Polyisocyanat Isocyanurat-, Iminooxadiazindion-, Uretdion-, Urethan-, Biuret-, Allophanat-, Carbodiimid-, Uretonimin- oder Oxadiazintrion-Gruppen.
Besonders bevorzugt als Bestandteil der zweiten Komponente sind Polyisocyanate in der Form von oligomeren Polyisocyanaten, insbesondere Biurete, Isocyanurate, Uretdione und Allophanate von HDI, IPDI und TDI, Gemische von MDI mit MDI-Carbodiimiden, MDI-Uretoniminen oder MDI-Urethanen, sowie polymeres MDI. Mit diesen Polyisocyanaten werden ausgehärtete Zusammensetzungen mit besonders hohen Festigkeiten erreicht.
Weiterhin besonders bevorzugt als Bestandteil der zweiten Komponente sind Polyisocyanate in der Form von Isocyanatgruppen aufweisenden Polyurethanpolymeren. Mit Isocyanatgruppen aufweisenden Polyurethanpolymere werden ausgehärtete Zusammensetzungen mit besonders hoher Dehnbarkeit erhalten. Weiterhin besonders bevorzugt als Bestandteil der zweiten Komponente sind Polyisocyanate in der Form von Mischungen aus mindestens einem Isocyanatgruppen aufweisenden Polyurethanpolymer und mindestens einem oligomeren Polyisocyanat. Mit solchen Mischungen lassen sich Festigkeit und Dehnbarkeit der ausgehärteten Zusammensetzungen an die gegebenen Ansprüche gut einstellen.
Ganz besonders bevorzugt ist das Polyisocyanat ein aromatisches Polyisocyanat, insbesondere eine bei Raumtemperatur flüssige Form von MDI. Dies sind insbesondere sogenannt polymeres MDI sowie MDI mit Anteilen von Oligomeren oder Derivaten davon. Damit werden besonders gute Verarbeitungseigenschaften und besonders hohe Festigkeiten erhalten.
Um Zusammensetzungen mit sehr hoher Festigkeit und guter Dehnbarkeit zu erhalten kann es vorteilhaft sein, wenn die zweiten Komponente eine Kombination aus einer bei Raumtemperatur flüssigen Form von MDI und einem Isocyanatgruppen aufweisenden Polyurethanpolymer enthält.

In einer Ausführungsform der Erfindung liegt das Polyisocyanat bei Raumtemperatur nicht in freier Form, sondern als bei Raumtemperatur festes, oberflächendesaktiviertes Polyisocyanat vor. Diesem liegt ein bei Raumtemperatur festes Polyisocyanat zugrunde, dessen Schmelzpunkt deutlich über Raumtemperatur liegt, insbesondere das kommerziell erhältliche, feinteilige Uretdion von 2,4-Toluylendiisocyanat, beispielsweise als Addolink® TT (von Rhein Chemie). Das bei Raumtemperatur feste Polyisocyanat ist an der Oberfläche zusätzlich desaktiviert, indem es mit einer Substanz, welche mindestens eine mit Isocyanatgruppen reaktionsfähige Gruppe aufweist, umgesetzt ist, beispielsweise mit einem primären Polyamin. Dadurch wird auf der Oberfläche der Polyisocyanat-Teilchen eine bei Raumtemperatur oder leicht erhöhter Temperatur beständige, d.h. undurchlässige und weitgehend unlösliche, Schutzschicht gebildet. Bei Erwärmung des oberflächendesaktivierten Polyisocyanats auf eine Temperatur von insbesondere mindestens 80 °C wird die Schicht auf den Polyisocyanat-Teilchen soweit beschädigt, dass die Isocyanatgruppen im Teilcheninnern für chemische Reaktionspartner zugänglich werden, sie also "aktiviert" werden.

Bevorzugt liegen die Isocyanatgruppen des Polyisocyanates in freier Form vor.

Weiterhin umfasst die Zusammensetzung mindestens ein blockiertes Amin **Z,** welches eine Aldiminogruppe, die nicht durch Tautomerisierung in eine Enaminogruppe überführbar ist, sowie mindestens eine weitere Reaktivgruppe ausgewählt aus der Gruppe bestehend aus Oxazolidinogruppen, Aldiminogruppen, Hydroxylgruppen, Mercaptogruppen, primären Aminogruppen, sekundären Aminogruppen und Isocyanatgruppen aufweist. Das blockierte Amin **Z** ist bei Raumtemperatur typischerweise flüssig. Es lässt sich somit einfach und ohne Verwendung von Lösemitteln in die Zusammensetzung einarbeiten.

Das blockierte Amin **Z** kann als Bestandteil der ersten oder als Bestandteil der zweiten Komponente vorliegen.
Ein blockiertes Amin **Z** mit Hydroxylgruppen oder Mercaptogruppen oder primären oder sekundären Aminogruppen ist insbesondere als Bestandteil der ersten Komponente geeignet. Wird es als Bestandteil der zweiten Komponente eingesetzt, kann es mit vorhandenen Isocyanatgruppen reagieren, wodurch schliesslich ein höhermolekulares, Isocyanatgruppen aufweisendes blockiertes Amin **Z** entsteht.
Ein blockiertes Amin **Z** mit Isocyanatgruppen ist insbesondere als Bestandteil der zweiten Komponente geeignet. Wird es als Bestandteil der ersten Komponente eingesetzt, kann es mit vorhandenen Hydroxylgruppen reagieren, wodurch schliesslich ein höhermolekulares, Hydroxylgruppen aufweisendes blockiertes Amin **Z** entsteht.

Geeignete blockierte Amine **Z** mit Oxazolidinogruppen sind insbesondere Kondensationsprodukte von Diethanolamin mit Aldehyden oder Ketonen zu N-(2-Hydroxyethyl)tetrahydrooxazolen. Bevorzugt sind diese anschliessend mittels Diisocyanaten, insbesondere HDI, oder mittels Diestern oder Carbonaten, zu Bis-Oxazolidinen umgesetzt. Durch hydrolytische Aktivierung ist aus jeder Oxazolidinogruppe sowohl eine sekundäre Aminogruppe als auch eine Hydroxylgruppe freisetzbar. Geeignete kommerzielle Oxazolidine sind insbesondere Härter OZ (von Bayer), Zoldine® RD-4 (von Angus Chemical), sowie Incozol® 3, Incozol® LV, Incozol® 4, Incozol® HP, Incozol® NC, Incozol® CF, Incozol® EH und Incozol® K (von Incorez).
Geeignete blockierte Amine **Z** mit Aldiminogruppen sind Kondensationsprodukte von primären Aminen mit Aldehyden. Durch hydrolytische Aktivierung ist aus jeder Aldiminogruppe eine primäre Aminogruppe freisetzbar.
Zu deren Herstellung geeignete primäre Amine sind in einer Ausführungsform Amine mit mindestens zwei primären Aminogruppen. Bei stöchiometrischer Umsetzung mit Aldehyden sind blockierte Amine **Z** mit mindestens zwei Aldiminogruppen erhältlich. Zu deren Herstellung geeignete primäre Amine sind in einer weiteren Ausführungsform Amine mit mindestens einer primären Aminogruppe und mit zusätzlich mindestens einer Hydroxylgruppe oder Mercaptogruppe oder sekundären Aminogruppe.

Ein blockiertes Amin **Z** mit mindestens einer Aldiminogruppe basiert bevorzugt auf einem Amin ausgewählt aus der Gruppe bestehend aus 1,6-Hexamethylendiamin, 1,5-Diamino-2-methylpentan, 1,3-Pentandiamin, 1-Amino-3-aminomethyl-3,5,5-trimethylcyclohexan (= Isophorondiamin), 2,2,4- und 2,4,4-Trimethylhexamethylendiamin, 1,3-Bis-(aminomethyl)benzol, 1,3-Bis-(aminomethyl)-cyclohexan, 1,4-Bis-(aminomethyl)cyclohexan, Bis-(4-aminocyclohexyl)methan, Bis-(4-amino-3-methylcyclohexyl)methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine® erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan, 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxy-ethoxy)-ethoxy)propylamin und 3-(6-Hydroxyhexyloxy)-propylamin, N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, N-Cocoalkyl-1,3-propandiamin, N-Oleyl-1,3-propandiamin, N-Soyaalkyl-1,3-propandiamin und N-Talgalkyl-1,3-propandiamin. Diese Amine sind besonders gut zugänglich und besonders verträglich in Polyurethansystemen.

Bevorzugt ist das blockierte Amin **Z** frei von primären Aminogruppen, insbesondere ist es frei von sekundären und von primären Aminogruppen. Solche blockierten Amine **Z** weisen gegenüber Isocyanatgruppen bei Kontakt mit Feuchtigkeit eine moderate Reaktivität auf.

Das blockierte Amin **Z** weist mindestens eine Aldiminogruppe, die nicht durch Tautomerisierung in eine Enaminogruppe überführbar ist, auf. Solche Aldiminogruppen weisen am Kohlenstoffatom in α-Stellung zum Kohlenstoffatom der Aldiminogruppe kein Wasserstoffatom auf. Diese Aldiminogruppen hydrolysieren besonders langsam und sind zusammen mit Isocyanaten unter Ausschluss von Feuchtigkeit besonders lagerstabil. Insbesondere sind sie auch mit aromatischen Isocyanaten sehr lagerstabil. Sie sind abgeleitet von Aldehyden, welche am Kohlenstoffatom in α-Stellung zum Kohlenstoffatom der Aldehydgruppe kein Wasserstoffatom aufweisen.

Insbesondere weist das blockierte Amin **Z** an der Aldiminogruppe einen Rest ausgewählt aus der Gruppe bestehend aus Phenyl, 2,2-Dimethylpropyl, 2,2-Dimethyl-3-phenylpropyl, 2,2-Dimethyl-3-acetoxypropyl, 2,2-Dimethyl-3-isobutyroxypropyl, 2,2-Dimethyl-3-caproyloxypropyl, 2,2-Dimethyl-3-benzoyloxypropyl, 2,2-Dimethyl-3-capryloyloxypropyl, 2,2-Dimethyl-3-caprinoyloxy-propyl, 2,2-Dimethyl-3-lauroyloxypropyl, 2,2-Dimethyl-3-myristoyloxypropyl, 2,2-Dimethyl-3-palmitoyloxypropyl, 2,2-Dimethyl-3-stearoyloxypropyl, 2,2-Dimethyl-3-dimethylaminopropyl, 2,2-Dimethyl-3-diethylaminopropyl, 2,2-Dimethyl-3-di-butylaminopropyl, 2,2-Dimethyl-3-(N-pyrrolidino)propyl, 2,2-Dimethyl-3-(N-pi-peridino)propyl, 2,2-Dimethyl-3-(N-morpholino)propyl, 2,2-Dimethyl-3-(N-(2,6-dimethyl)morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethyl-amino)propyl, 2,2-Dimethyl-3-(N-benzylisopropylamino)propyl, 2,2-Dimethyl-3-(N-methylcyclohexylamino)propyl, 2,2-Dimethyl-3-bis-(2-methoxyethyl)amino-propyl, 2,2-Dimethyl-3-bis(2-hydroxyethyl)aminopropyl und 2,2-Dimethyl-3-bis(2-hydroxypropyl)aminopropyl auf. Blockierte Amine **Z** mit solchen Aldiminogruppen sind gut zugänglich und sehr gut verträglich in Polyurethansystemen.
Davon besonders bevorzugt sind 2,2-Dimethyl-3-caproyloxypropyl, 2,2-Dimethyl-3-benzoyloxypropyl, 2,2-Dimethyl-3-capryloyloxypropyl, 2,2-Dimethyl-3-caprinoyloxypropyl, 2,2-Dimethyl-3-lauroyloxypropyl, 2,2-Dimethyl-3-myristoyloxypropyl, 2,2-Dimethyl-3-palmitoyloxypropyl, 2,2-Dimethyl-3-stearoyloxypropyl, 2,2-Dimethyl-3-(N-morpholino)propyl, 2,2-Dimethyl-3-(N-(2,6-dimethyl)-morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethylamino)-propyl, 2,2-Dimethyl-3-(N-benzylisopropylamino)propyl, 2,2-Dimethyl-3-bis-(2-methoxyethyl)amino-propyl, 2,2-Dimethyl-3-bis(2-hydroxyethyl)aminopropyl und 2,2-Dimethyl-3-bis(2-hydroxy-2-methylethyl)aminopropyl, insbesondere 2,2-Dimethyl-3-lauroyloxypropyl und 2,2-Dimethyl-3-(N-morpholino)propyl. Blockierte Amine **Z** mit diesen Aldiminogruppen sind geruchsarm oder geruchsfrei. Sie weisen den Vorteil auf, dass bei ihrer Hydrolyse geruchsarme oder geruchsfreie Aldehyde freigesetzt werden, welche auch im freigesetzten Zustand weitgehend in der Zusammensetzung verbleiben, also nicht in die Umgebung diffundieren. Dadurch sind Zusammensetzungen enthaltend solche blockierte Amine **Z** insbesondere auch für Anwendungen in geschlossenen Räumen geeignet.
In einem Aspekt der Erfindung besonders bevorzugt sind 2,2-Dimethyl-3-bis(2-hydroxyethyl)aminopropyl und 2,2-Dimethyl-3-bis(2-hydroxy-2-methylethyl)aminopropyl. Diese Reste weisen jeweils zwei Hydroxylgruppen auf. Blockierte Amine **Z** mit diesen Aldiminogruppen setzten bei der Hydrolyse und Reaktion mit Isocyanatgruppen Aldehyde frei, welche zwei Hydroxylgruppen aufweisen, wodurch sie bei der Aushärtung der Zusammensetzung ins Polymer eingebaut werden können, was sehr vorteilhaft sein kann.

Besonders bevorzugte blockierte Amine **Z** sind ausgewählt aus der Gruppe bestehend aus N,N'-Bis(2,2-dimethyl-3-lauroyloxypropyliden)-1,6-hexamethylendiamin, N,N'-Bis(2,2-dimethyl-3-acetoxypropyliden)-1,6-hexamethylendiamin, N,N'-Bis(2,2-dimethyl-3-(N-morpholino)-propyliden)-1,6-hexamethylendiamin, N,N'-Bis(2,2-dimethyl-3-phenylpropyliden)-1,6-hexamethylendiamin, N,N'-Bis-(2,2-dimethyl-3-bis(2-hydroxyethyl)aminopropyliden)-1,6-hexamethylendiamin, N,N'-Bis(2,2-dimethyl-3-bis(2-hydroxypropyl)aminopropyliden)-1,6-hexamethylendiamin, N,N'-Bis(2,2-dimethyl-3-lauroyloxypropyliden)-1-amino-3-aminomethyl-3,5,5-trimethylcyclohexan, N,N'-Bis(2,2-dimethyl-3-acetoxypropyliden)-1-amino-3-aminomethyl-3,5,5-trimethylcyclohexan, N,N'-Bis(2,2-dimethyl-3-(N-morpholino)-propyliden)-1-amino-3-aminomethyl-3,5,5-trimethylcyclohexan, N,N'-Bis(2,2-dimethyl-3-phenylpropyliden)-1-amino-3-aminomethyl-3,5,5-trimethylcyclohexan, N,N'-Bis(2,2-dimethyl-3-bis(2-hydroxyethyl)aminopropyliden)-1-amino-3-aminomethyl-3,5,5-trimethylcyclohexan, N,N'-Bis(2,2-dimethyl-3-bis(2-hydroxypropyl)aminopropyliden)-1-amino-3-aminomethyl-3,5,5-trimethylcyclohexan, N,N'-Bis(2,2-dimethyl-3-lauroyloxypropyliden)-polyoxypropylendiamin, N,N'-Bis(2,2-dimethyl-3-acetoxypropyliden)-polyoxypropylendiamin, N,N'-Bis(2,2-dimethyl-3-(N-morpholino)-propyliden)-polyoxypropylendiamin, N,N'-Bis(2,2-dimethyl-3-bis(2-hydroxyethyl)aminopropyliden)-polyoxypropylen-diamin, N,N'-Bis(2,2-dimethyl-3-bis(2-hydroxypropyl)aminopropyliden)-polyoxy-propylendiamin, N,N',N"-Tris(2,2-dimethyl-3-lauroyloxypropyliden)-polyoxypro-pylentriamin, N,N',N"-Tris(2,2-dimethyl-3-acetoxypropyliden)-polyoxypropylentriamin, N,N',N"-Tris(2,2-dimethyl-3-(N-morpholino)-propyliden)-polyoxypropylentriamin, N,N',N"-Tris(2,2-dimethyl-3-bis(2-hydroxyethyl)aminopropyliden)-polyoxypropylentriamin, N,N',N"-Tris(2,2-dimethyl-3-bis(2-hydroxypropyl)aminopropyliden)-polyoxypropylentriamin, N-2,2-Dimethyl-3-lauroyloxypropyliden-2-(2-aminoethoxy)ethanol, N-2,2-Dimethyl-3-acetoxypropyliden-2-(2-aminoethoxy)ethanol und N-2,2-Dimethyl-3-(N-morpholino)-propyliden-2-(2-aminoethoxy)ethanol.

Die Zusammensetzung umfasst weiterhin mindestens einen Katalysator **K** ausgewählt aus der Gruppe bestehend aus Bismut(III)-Verbindungen und Zirkonium(IV)-Verbindungen.
Der Katalysator **K** kann als Bestandteil der ersten und/oder der zweiten Komponente vorliegen.
Der Katalysator **K** kann als Pulver, als Flüssigkeit oder als Lösung eingesetzt werden.

Als Katalysatoren **K** besonders geeignet sind Bismut(III)-Komplexverbindungen und Zirkonium(IV)-Komplexverbindungen. Komplexverbindungen sind im Vergleich zu andern Verbindungen dieser Metalle stabiler gegenüber Hydrolyse, wodurch die Komplexverbindungen ihre katalytische Aktivität auch in Gegenwart von Wasser weitgehend behalten.
Bismut(III)-Komplexverbindungen und Zirkonium(IV)-Komplexverbindungen sind nach bekannten Verfahren ausgehend von beispielsweise Bismut(III)-oxid oder Zirkonium(IV)-oxid herstellbar.

Geeignete Liganden von Bismut(III)-Komplexverbindungen und Zirkonium(IV)-Komplexverbindungen sind insbesondere
- Alkoholate, insbesondere Methanolat, Ethanolat, Propanolat, Isopropanolat, Butanolat, tert.Butanolat, Isobutanolat, Pentanolat, Neopentanolat, Hexanolat und Ocanolat;
- Carboxylate, insbesondere Formiat, Acetat, Propionat, Butanoat, Isobutanoat, Pentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat und Phenylacetat;
- 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butanandionat und 2-Acetylcyclohexanonat;
- Oxinat;
- 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, Ethyl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäureethylesterat; und
- 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclopentancarboxamidat, N,N-Dibutyl-3-oxo-3-phenylpropanamidat, N,N-Bis(2-methoxyethyl)-3-oxo-3-phenylpropanamidat und N-Polyoxyalkylen-1,3-ketoamidate wie insbesondere Acetoamidate von Polyoxyalkylenaminen mit ein, zwei oder drei Aminogruppen und einem Molekulargewicht bis 5000 g/mol, insbesondere die von Huntsman unter dem Handelsnamen Jeffamine® erhältlichen Typen SD-231, SD-401, SD-2001, ST-404, D-230, D-400, D-2000, T-403, M-600 und XTJ-581.

Der Katalysator **K** bewirkt in der Zusammensetzung eine rasche Aushärtung, die überraschend störungsarm abläuft; insbesondere entstehen weniger oft Blasen als mit anderen Katalysatoren nach dem Stand der Technik. Zusätzlich beeinflusst der Katalysator **K** die Zusammensetzung überraschenderweise so, dass sie nach der Aushärtung über eine höhere Festigkeit, insbesondere ein höheres Elastizitätsmodul, verfügt als wenn andere Katalysatoren nach dem Stand der Technik, wie beispielsweise 1,4-Diazobicyclo[2.2.2]octan (DABCO), oder Dibutylzinndilaurat, eingesetzt werden.

Der Katalysator **K** liegt in der Zusammensetzung insbesondere in einer solchen Menge vor, dass die Zusammensetzung nach dem Vermischen der ersten und der zweiten Komponente eine Offenzeit im Bereich von 1 Minute bis 2 Stunden, bevorzugt 2 Minuten bis 1 Stunde, besonders bevorzugt 5 bis 30 Minuten, aufweist. Die Offenzeit der Zusammensetzung wird dabei sowohl von der Art des Katalysators **K,** den verhandenen Polyolen, Polyisocyanaten, blockierten Aminen **Z** und weiteren mit Isocyanaten reaktiven Substanzen beeinflusst, sowie weiterhin von der Verfügbarkeit von Wasser in der Zusammensetzung und der herrschenden Temperatur.

Der Katalysator **K** weist besonders bevorzugt mindestens einen Liganden ausgewählt aus der Gruppe bestehend aus Alkoholaten, Carboxylaten, 1,3-Diketonaten, 1,3-Ketoesteraten, Oxinaten und 1,3-Ketoamidaten auf. Diese Liganden bilden mit Bismut(III) und Zirkonium(IV) stabile Komplexverbindungen.

Besonders bevorzugt weist der Katalysator **K** mindestens einen Liganden ausgewählt aus der Gruppe bestehend aus1,3-Diketonaten, 1,3-Ketoesteraten, Oxinaten und 1,3-Ketoamidaten auf. Diese Liganden bilden mit Bismut(III) und Zirkonium(IV) Chelat-Komplexe. Neben mindestens einem der genannten Chelat-Liganden kann der Katalysator **K** zusätzliche Liganden, welche keine Chelate bilden, aufweisen, insbesondere die genennten Alkoholate und Carboxylate. Solche Chelat-Komplexe sind besonders stabil gegenüber Hydrolyse.

Als Katalysator **K** besonders bevorzugt sind Zirkonium(IV)-Komplexverbindungen. Zirkonium(IV)-Komplexverbindungen sind besonders lagerstabil in Gegenwart von Polyisocyanaten. Dadurch sind sie besonders gut einsetzbar als Bestandteil der zweiten Komponente. Dies ist besonders vorteilhaft, wenn die Zusammensetzung als Bestandteil der ersten Komponente zugesetztes Wasser enthält. Weiterhin beschleunigen Zirkonium(IV)-Komplexverbindungen die Aushärtung der Zusammensetzung besonders gut und ergeben nach der Aushärtung besonders hohe Festigkeiten.

Bevorzugt liegt die Zirkonium(IV)-Komplexverbindung in einer solchen Menge vor, dass die Anzahl Milliequivalente von Zirkonium gegenüber der Anzahl NCO-Equivalente in der Zusammensetzung im Bereich von 0.05 bis 50, bevorzugt 0.1 bis 20, insbesondere 0.2 bis 10, liegt.

Besonders bevorzugte Zirkonium(IV)-Komplexverbindungen sind ausgewählt aus der Gruppe bestehend aus Zirkonium(IV)-tetrakis(acetat), Zirkonium(IV)-tetrakis(octanoat), Zirkonium(IV)-tetrakis(2-ethylhexanoat), Zirkonium(IV)-tetrakis(neodecanoat), Zirkonium(IV)-tetrakis(acetylacetonat), Zirkonium(IV)-tetrakis(1,3-diphenylpropan-1,3-dionat), Zirkonium(IV)-tetrakis(ethylacetoacetat), Zirkonium(IV)-tetrakis(N,N-diethyl-3-oxo-butanamidat) und Zirkonium(IV)-Komplexverbindungen mit verschiedenen dieser genannten Liganden.

Als Katalysator **K** bevorzugt sind in einer weiteren Ausführungsform Bismut(III)-Komplexverbindungen. Bismut(III)-Komplexverbindungen sind gegenüber Hydrolyse besonders stabil.
Bevorzugt liegt die Bismut(III)-Komplexverbindung in einer solchen Menge vor, dass die Anzahl Milliequivalente von Bismut gegenüber der Anzahl NCO-Equivalente in der Zusammensetzung im Bereich von 0.01 bis 20, bevorzugt 0.05 bis 5, insbesondere 0.1 bis 3, liegt.
Besonders bevorzugte Bismut(III)-Komplexverbindungen sind ausgewählt aus der Gruppe bestehend aus Bismut(III)-tris(acetat), Bismut(III)-tris(octanoat), Bismut(III)-tris(2-ethylhexanoat), Bismut(III)-tris(neodecanoat), Bismut(III)-bis-(neodecanoat)-oxinat, Bismut(III)-neodecanoat-bis(oxinat), Bismut(III)-tris(N,N-diethyl-3-oxo-butanamidat) und Bismut(III)-Komplexverbindungen mit verschiedenen dieser genannten Liganden.

Die Zusammensetzung kann als Bestandteil der ersten Komponente weiterhin mindestens ein Diol mit zwei primären Hydroxylgruppen und einem Molekulargewicht im Bereich von 60 bis 150 g/mol enthalten. Solche Diole werden auch als Kettenverlängerer bezeichnet. Das Diol bildet mit dem Polyisocyanat im ausgehärteten Material sogenannte Hartsegmente. Es ermöglicht ausgehärtete Zusammensetzungen mit hohen Festigkeiten.
Als Diol geeignet sind insbesondere1,2-Ethandiol, 1,3-Propandiol, 1,4-Butandiol, 1,5-Pentandiol, 1,6-Hexandiol, 1,4-Cyclohexandimethanol und Diethylenglykol. Diese Diole sind gut erhältlich und weisen primäre, sterisch kaum gehinderte Hydroxygruppen auf, welche mit Isocyanatgruppen besonders reaktiv sind.
Davon bevorzugt sind 1,3-Propandiol, 1,4-Butandiol und 1,5-Pentandiol. Diese Diole sind linear und ergeben somit besonders hohe Festigkeiten. Zudem sind sie besonders gut handhabbar, da sie kaum hydrophil und bei Raumtemperatur flüssig sind.
Bevorzugt liegt das Diol in der ersten Komponente in einer solchen Menge vor, dass das Verhältnis der Anzahl OH-Gruppen des Diols zur Anzahl OH-Gruppen des Polyols im Bereich von 1 bis 50, bevorzugt 2 bis 20, insbesondere 2 bis 10, liegt.

Bevorzugt liegt das blockierte Amin **Z** in der Zusammensetzung in einer solchen Menge vor, dass die Anzahl seiner reaktiven Gruppen inklusive blockierte Aminogruppen gegenüber der Anzahl OH-Gruppen des Polyols und weiterer in der Zusammensetzung gegebenenfalls vorhandener Alkohole im Bereich von 0.01 bis 10, bevorzugt 0.02 bis 5, besonders bevorzugt 0.05 bis 2, am meisten bevorzugt 0.1 bis 1, liegt. Oxazolidinogruppen werden dabei als zwei gegenüber Isocyanatgruppen reaktive Gruppen gezählt.

Um die richtige Balance zwischen Reaktivität der Hydroxylgruppen und Reaktivität der hydrolysierenden Gruppen des blockierte Amins **Z** zu erreichen ist die Wahl des Katalysators entscheidend. Überraschenderweise wurde gefunden, dass in Anwesenheit von Bismut(III)- und/oder Zirkonium(IV)-Verbindungen das hydrolysierende blockierte Amin **Z** so ins aushärtende Polymer aus Polyisocyanat und Polyol eingebaut wird, dass eine erhöhte Festigkeit der ausgehärteten Zusammensetzung resuliert, während mit sonst in Polyurethansystemen üblichen Katalysatoren wie DABCO, Dibutylzinndilaurat, Zinn(II)-octoat oder Titanaten durch das blockierte Amin **Z** keine erhöhten Festigkeiten beobachtet werden, sondern, im Gegenteil, oft deutlich reduzierte Festigkeiten resultieren.

Nach dem Vermischen der ersten und der zweiten Komponente reagieren vorhandene Hydroxylgruppen, Mercaptogruppen und prmäre und sekundäre Aminogruppen mit den vorhandenen Isocyanatgruppen. Die blockierten, hydrolytisch aktivierbaren Aminogruppen des blockierte Amins **Z** reagieren mit vorhandenen Isocyanatgruppen, sobald sie mit Feuchtigkeit in Kontakt kommen. Das zur Hydrolyse der blockierten Aminogruppen benötigte Wasser kann dabei, zumindest teilweise, bereits in der Zusammensetzung vorhanden sein, oder es diffundiert von aussen in Form von Feuchtigkeit aus der Umgebung, insbesondere in Form von Luftfeuchtigkeit, in die vermischte, applizierte Zusammensetzung.

Bevorzugt enthält die Zusammensetzung als Bestandteil der ersten Komponente zusätzlich Wasser oder eine Wasser erzeugende Substanz, insbesondere in einer solchen Menge, dass das Verhältnis zwischen der Anzahl der Wassermoleküle und der Anzahl der blockierten Aminogruppen mehr als 0.25, bevorzugt mindestens 0.5, beträgt. Eine solche Zusammensetzung weist nach der Aushärtung eine besonders hohe Festigkeit auf.
Wasser kann entweder in Form von Restfeuchtigkeit mit in der Zusammensetzung vorhandenen Substanzen wie insbesondere Polyolen, Füllstoffen, Weichmachern oder Vernetzern in die erste Komponente gelangt sein, oder es wird der Zusammensetzung zugesetzt, entweder als Bestandteil der ersten Komponente oder bei der Vermischung der beiden Komponenten oder bei der Applikation der vermischten Zusammensetzung.
Wasser kann entweder in freier Form vorliegen, oder es kann an ein Trägermaterial gebunden sein. Die Bindung an ein gegebenenfalls vorhandenes Trägermaterial ist dabei reversibel, das heisst, das Wasser ist für die Reaktion mit dem blockierten Amin **Z** zugänglich.
Als Trägermaterialien für Wasser geeignet sind poröse Materialien, welche Wasser in Hohlräume einschliessen, insbesondere Kieselgur und Molekularsiebe. Weitere geeignete Trägermaterialien sind solche, die Wasser in nicht stöchiometrischen Mengen aufnehmen und eine pastöse Konsistenz haben oder Gels bilden, beispielsweise Kieselgele, Tone, Polysaccharide oder Polyacrylsäuren, die auch unter dem Begriff "Super-Absorber" bekannt sind und beispielsweise in der Herstellung von Hygieneartikeln zum Einsatz kommen. Weiterhin geeignete Trägermaterialien sind Polymere, in welchen Wasser so emulgiert werden kann, dass eine stabile Emulsion entsteht. Weiterhin geeignet sind Hydrate und Aquakomplexe, insbesondere anorganische Verbindungen, die Wasser koordinativ gebunden oder als Kristallwasser enthalten.

Für den Fall, dass die Zusammensetzung in der ersten Komponente zusätzlich Wasser enthält, sind als Bestandteil der ersten Komponente blockierte Amine **Z** mit Aldiminogruppen bevorzugt. Aldimine hydrolysieren in Gegenwart von Wasser meist nicht spontan, sondern erst, wenn die Mischung aus Wasser und Aldimin mit Isocyanaten kontaktiert wird; dabei reagieren die hydrolysierenden Aldiminogruppen mit den Isocyanatgruppen. Die moderate Reaktionsgeschwindigkeit von Aldiminen mit Isocyanaten ist also auch dann gegeben, wenn die Aldimine bereits vorher mit Wasser in Kontakt waren.

Für den Fall, dass die Zusammensetzung ein blockiertes Amin **Z** mit Oxazolidinogruppen enthält und in der ersten Komponente zusätzlich Wasser vorhanden ist, ist das Oxazolidin bevorzugt ein Bestandteil der zweiten Komponente, da Oxazolidine in Gegenwart von Wasser meist spontan zu den entsprechenden Aminoalkoholen hydrolysieren und als solche gegenüber Isocyanaten eine hohe Reaktivität aufweisen, die die Offenzeit verkürzt.

In einer Zusammensetzung, die als Bestandteil der ersten Komponente zusätzlich Wasser oder eine Wasser erzeugende Substanz enthält, ist der Katalysator **K** bevorzugt ein Bestandteil der zweiten Komponente. Auf diese Weise kann der Katalysator vor dem Vermischen der Zusammensetzung nicht durch Hydrolyseprozesse deaktiviert werden.

Die Zusammensetzung kann als Bestandteil der ersten Komponente zusätzlich weitere mit Isocyanatgruppen reaktionsfähige Substanzen enthalten. Insbesondere kann die erste Komponente geringe Mengen von primären Aminen enthalten, insbesondere um mit dem Vermischen der beiden Komponenten unmittelbar ein strukturviskoses, weniger stark abfliessendes oder abrutschendes Material zu erhalten. Dafür geeignete primäre Amine sind insbesondere aliphatische Polyamine wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan, 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Diamino-2,2,6-trimethylcyclohexan (TMCDA), Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tri-cyclo[5.2.1.0^{2,6}]decan, 1,8-Menthandiamin und 1,3- und 1,4-Bis-(aminomethyl)-benzol, sowie Ethergruppen-haltige Polyamine, insbesondere Bis-(2-aminoethyl)ether, 3,6-Dioxaoctan-1,8-diamin, 4,7-Dioxadecan-1,10-diamin, 4,7-Di-oxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Polyamine, 3,9-Bis-(3-aminopropyl)-2,4,8,10-tetraoxaspiro[5.5]undecan, Bis-(3-aminopropyl)polytetrahydrofurane und andere Polytetrahydrofuran-diamine, Jeffamine® RFD-270 (von Huntsman), sowie kurzkettige Polyoxyalkylen-Polyamine, welche Produkte aus der Aminierung von Polyoxyalkylen-Di- oder Triolen darstellen und beispielsweise erhältlich sind unter dem Namen Jeffamine® (von Huntsman), insbesondere Jeffamine® D-230, Jeffamine® D-400 und Jeffamine® T-403.
Davon besonders geeignet sind 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)-cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol, 1,4-Bis-(aminomethyl)benzol und die Jeffamine® D-230, D-400 und T-403.

Für Zusammensetzungen, welche nach dem Vermischen der beiden Komponenten standfest sein sollen, und welche im ausgehärteten Zustand sehr hohe Festigkeiten aufweisen sollen sind insbesondere 1,3-Bis-(aminomethyl)cyclohexan und 1,3-Bis-(aminomethyl)benzol, insbesondere 1,3-Bis-(aminomethyl)-benzol, geeignet.

Weiterhin kann die erste Komponente niedrigmolekulare zwei- oder mehrwertigen Alkohole enthalten, wie insbesondere 1,2-Propandiol, 2-Methyl-1,3-propandiol, 2-Ethyl-2-methyl-1,3-propandiol, 2-Methyl-2-propyl-1,3-propandiol, Neopentylglykol, Triethylenglykol, die isomeren Dipropylenglykole und Tripropylenglykole, die isomeren Butandiole, die isomeren Pentandiole, die isomeren Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole und niedrigmolekulare Alkoxylierungsprodukte dieser Alkohole.

Die Zusammensetzung kann neben den genannten Bestandteilen weitere in zweikomponentigen Polyurethanzusammensetzungen üblicherweise eingesetzte Bestandteile enthalten, insbesondere die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, Glimmer, Aluminiumoxide, Kieselsäuren, insbesondere hochdisperse Kieselsäuren aus Pyrolyseprozessen, Zemente, Gipse, Flugaschen, Russe, insbesondere industriell hergestellte Russe (im Folgenden als "Russ" bezeichnet), Graphit, Metall-Pulver, beispielsweise von Aluminium, Kupfer, Eisen, Zink, Silber oder Stahl, PVC-Pulver oder Hohlkugeln;
- Fasern, beispielsweise aus Polyethylen;
- Pigmente, beispielsweise Titandioxid, Zinkoxid oder Eisenoxide;
- Katalysatoren, welche die Hydrolyse der geschützen Aminogruppen beschleunigen, insbesondere Säuren, insbesondere organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- weitere Katalysatoren, welche die Reaktion der Isocyanatgruppen beschleunigen, insbesondere Organozinnverbindungen wie Dibutylzinndiacetat, Dibutylzinndilaurat, Dibutylzinndichlorid, Dibutylzinndiacetylacetonat und Dioctylzinndilaurat; Verbindungen von Zink, Mangan, Eisen, Chrom, Cobalt, Kupfer, Nickel, Molybdän, Blei, Cadmium, Quecksilber, Antimon, Vanadium, Titan und Kalium, insbesondere Zink(II)-acetat, Zink(II)-2-ethylhexanoat, Zink(II)-laurat, Zink(II)-acetylacetonat, Eisen(III)-2-ethylhexanoat, Cobalt(II)-2-ethylhexanoat, Kupfer(II)-2-ethylhexanoat, Nickel(II)-naphthenat, Aluminiumlactat, Aluminiumoleat, Diisopropoxytitan-bis-(ethylacetoacetat) und Kaliumacetat; tertiäre Aminogruppen enthaltende Verbindungen, insbesondere 2,2'-Dimorpholinodiethylether, 1,4-Diazabicyclo[2.2.2]octan, N-Ethyl-diisopropylamin, N,N,N',N'-Tetramethyl-alkylendiamine, Pentamethyl-alkylentriamine und höhere Homologe davon, Bis-(N,N-diethylaminoethyl)-adipat, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, N,N'-Dimethylpiperazin; stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen;
- Rheologie-Modifizierer, insbesondere Verdickungsmittel oder Thixotropiermittel, zum Beispiel Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether und hydrophob modifizierte Polyoxyethylene;
- Trocknungsmittel, wie beispielsweise Molekularsiebe, Calciumoxid, hochreaktive Isocyanate wie p-Tosylisocyanat, monomere Diisocyanate, Mono-Oxazolidine wie Incozol® 2 (von Incorez), Orthoameisensäureester, Alkoxysilane wie Tetraethoxysilan, Organoalkoxysilane wie Vinyltrimethoxysilan;
- Haftvermittler, beispielsweise Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)mercaptosilane und Aldiminosilane, sowie oligomere Formen dieser Silane, insbesondere 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen;
- Stabilisatoren gegen Oxidation, Wärme, Licht- und UV-Strahlung;
- flammhemmende Substanzen, beispielsweise Aluminiumhydroxide, Magnesiumhydroxid, Phosphorsäureester;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz von weiteren Bestandteilen der Zusammensetzung darauf zu achten, dass diese die Lagerstabilität der Zusammensetzung nicht stark beeinträchtigen. Falls solche Substanzen zusammen mit Isocyanaten gelagert werden sollen, bedeutet dies insbesondere, dass sie kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die Zusammensetzung mindestens eine der genannten Säuren, insbesondere Salicylsäure. Bevorzugt liegt die Säure nicht in der gleichen Komponente wie der Katalysator **K** vor.

Eine bevorzugte Zusammensetzung enthält als Bestandteil der ersten Komponente zusätzlich Wasser und mindestens eine Säure und der Katalysator **K** ist ein Bestandteil der zweiten Komponente.

Die erste und die zweite Komponente der Zusammenstzung werden vorteilhaft derart formuliert, dass in der vermischten Zusammensetzung das Verhältnis zwischen der Anzahl Isocyanatgruppen und der Anzahl gegenüber Isocyanaten reaktiven Gruppen - wozu auch die blockierten Aminogruppen gezählt werden - vor der Aushärtung ungefähr im Bereich von 2 bis 0.8, bevorzugt 1.4 bis 0.9, besonders bevorzugt 1.25 bis 1, und insbesondere 1.1 bis 1, liegt. Oxazolidinogruppen werden dabei als zwei gegenüber Isocyanatgruppen reaktive Gruppen gezählt

Die Herstellung der beiden Komponenten erfolgt getrennt voneinander und, zumindest für die zweite Komponente unter Ausschluss von Feuchtigkeit. Die Komponenten werden typischerweise jeweils in einem eigenen Gebinde gelagert. Weitere Bestandteile der Zusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor der Anwendung getrennt voneinander gelagert und erst bei oder unmittelbar vor der Anwendung miteinander vermischt. Die Komponenten sind vorteilhaft in einer Verpackung, welche aus zwei voneinander getrennten Kammern besteht, vorhanden.

Das Mischen der beiden Komponenten erfolgt typischerweise über Statikmischer oder mit Hilfe von dynamischen Mischern. Beim Mischen ist darauf zu achten, dass die zwei Komponenten möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann.

In einer bevorzugten Ausführungsform liegen die Isocyanate der zweiten Komponente in freier Form vor. Zur Anwendung einer solchen Zusammensetzung werden die beiden Komponenten kurz vor oder während der Applikation miteinander vermischt. Das Mischungsverhältnis zwischen den beiden Komponenten wird bevorzugt so gewählt, dass die Isocyanatgruppen und gegenüber Isocyanaten reaktive Gruppen in einem geeigneten Verhältnis vorliegen, wie vorgängig beschrieben. In Gewichtsteilen liegt das Mischungsverhältnis zwischen der ersten und der zweiten Komponente typischerweise im Bereich von 1:10 bis 10:1. Die Vermischung kann kontinuierlich oder batchweise erfolgen. Dabei wird vorteilhaft darauf geachtet, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur oder bei erhöhter Temperatur, insbesondere bei einer Temperatur im Bereich von 15 bis 40 °C.
Beim Kontakt der ersten Komponente mit freien Isocyanatgruppen der zweiten Komponente beginnt die Aushärtung durch chemische Reaktion. Dabei laufen insbesondere folgende Prozesse ab: Hydroxylgruppen reagieren mit moderater Geschwindigkeit mit freien Isocyanatgruppen. Blockierte Aminogruppen des blockierten Amins **Z** reagieren in Anwesenheit von Wasser unter Hydrolyse mit Isocyanatgruppen. Diese Reaktion ist zusätzlich durch die Verfügbarkeit von Wasser in der Zusammensetzung beeinflusst. Das zur Hydrolyse benötigte Wasser kann entweder schon in der vermischten Zusammensetzung vorhanden sein oder es kann von aussen, beispielsweise in Form von Luftfeuchtigkeit, in die Zusammensetzung eindringen. Die Isocyanatgruppen reagieren mit den hydrolysierenden Aldimino- oder Oxazolidinogruppen; dabei wird ein Keton oder insbesondere ein Aldehyd freigesetzt. Weist das Keton oder der Aldehyd zusätzlich zur Carbonylgruppe gegenüber Isocyanatgruppen reaktive Gruppen auf, beispielsweise eine oder mehrere Hydroxylgruppen, so reagieren diese ebenfalls mit vorhandenen Isocyanatgruppen. Überschüssige Isocyanatgruppen der Zusammensetzung reagieren mit vorhandener Feuchtigkeit. Als Resultat dieser Reaktionen härtet die Zusammensetzung zu einem festen Material aus. Dieser Vorgang wird auch als Vernetzung bezeichnet. Freigesetzte Aldehyde oder Ketone können, abhängig von ihrer Flüchtigkeit und den herrschenden Umgebungsbedingungen, aus der aushärtenden oder ausgehärteten Zusammensetzung herausdiffundieren, oder sie verbleiben in der ausgehärteten Zusammensetzung.
In einer weiteren Ausführungsform liegen die Isocyanate der zweiten Komponente nicht in freier, sondern als bei Raumtemperatur festes, oberflächendesaktiviertes Polyisocyanat vor. In diesem Fall findet nach dem Vermischen der beiden Komponenten keine Aushärtung statt, solange die vermischte Zusammensetzung vor übermässiger Wärmemeinwirkung geschützt wird. Im vermischten Zustand ist die Zusammensetzung über einen längeren Zeitraum lagerfähig, bevor sie zur Anwendung schliesslich aufgeheizt wird, insbesondere auf eine Temperatur oberhalb von 80 °C, und die Isocyanatgruppen aktiviert werden. Die vermischte, noch nicht mit Wärme in Kontakt gekommene Zusammensetzung kann in einem geeigneten Gebinde, insbesondere einem Fass, Hobbock, Beutel, Eimer, einer Büchse, Kartusche oder Tube, gelagert werden. Sie kann zu einem späteren Zeitpunkt appliziert und schliesslich mittels Hitzeeinwirkung ausgehärtet werden. Sie kann aber auch kurz nach dem Vermischen appliziert und zu einem späteren Zeitpunkt mittels Hitzeeinwirkung ausgehärtet werden. Oder sie kann bereits beim Vermischen soweit erhitzt werden, dass die Aushärtung erfolgt.

Ein weiterer Gegenstand der Erfindung ist somit auch eine ausgehärtete Zusammensetzung erhalten aus der Aushärtung einer Zusammensetzung wie im vorliegenden Dokument beschrieben.

Die Applikation Zusammensetzung erfolgt auf mindestens ein Substrat, wobei die Folgenden besonders geeignet sind:
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

Die Zusammensetzung ist vorteilhaft verwendbar als Klebstoff, Dichtstoff, Beschichtung oder Vergussmasse, insbesondere für Anwendungen, bei welchen elastische Eigenschaften und eine gewisse Festigkeit erforderlich sind. Insbesondere verwendbar ist sie für Klebe-, Abdichtungs- und Beschichtungsanwendungen in der Bau- und Fertigungsindustrie und im Fahrzeugbau, insbesondere für die Parkettverklebung, Anbauteilverklebung, Hohlraumversiegelung, Montage, Karosserieverklebung, Scheibenverklebung, Fugenabdichtung, Nahtabdichtung, Verankerung, Bodenbeschichtung, als Schutzbeschichtung, Rohrbeschichtung oder als Primer.

Aus der Verwendung der Zusammensetzung entsteht ein Artikel enthaltend die ausgehärtete Zusammensetzung.
Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels, oder ein Artikel der Möbel-, Textil- oder Verpackungsindustrie.

Die beschriebene zweikomponentige Zusammensetzung zeichnet sich durch vorteilhafte Eigenschaften aus. Sie weist eine relativ lange Offenzeit auf, sodass sie auf einfache Weise verwendbar ist. Die Aushärtung erfolgt dann schnell und weitgehend blasenfrei, wobei hohe Frühfestigkeiten und Endfestigkeiten entstehen, abhängig von den verwendeten Ausgangsmaterialien. Die Endfestigkeit ist durch die Kombination aus blockiertem Amin **Z** und Katalysator **K** besonders hoch. Dies ist ein Hinweis darauf, dass das dem blockierten Amin **Z** zugrunde liegende Amin bei der Aushärtung gut ins ausgehärtete Polymer eingebunden ist. Für Zusammensetzungen, welche sowohl Polyole als auch blockierte Amine enthalten, ist dies keineswegs selbstverständlich. Mit den im Stand der Technik sonst üblichen Katalysatoren wie tertiären Aminen, Dialkylzinn(IV)-Verbindungen, Zinn(II)-Verbindungen, Zink(II)-Verbindungen oder Titan(IV)-Verbindungen ist die Aushärtung von Kombinationen aus blockierten Aminen **Z** und Polyolen nämlich massiv gestört, sodass die erreichten Festigkeiten oft massiv tiefer sind als ohne blockiertes Amin **Z.** Teilweise treten unter feuchten Bedingungen bei der Aushärtung Blasen bis hin zu Aufschäumen der Zusammensetzung auf.

Die beschriebene Zusammensetzung kann insbesondere als Klebstoff für elastische oder strukturelle Verklebungen verwendet werden, beispielsweise im Fahrzeugbau, insbesondere für das Ankleben von Teilen, wie Kunststoffabdeckungen, Zierleisten, Flansche, Stosstangen, Führerkabinen oder andere Anbauteile an die lackierte Karosserie des Fahrzeugs, oder das Einkleben von Scheiben in die Karosserie.

Ein weiterer Aspekt der vorliegenden Erfindung betrifft ein Verfahren zum Verkleben von einem ersten Substrat mit einem zweiten Substrat. Der Klebstoff kann in einem Verfahren zum Verkleben von einem ersten Substrat mit einem zweiten Substrat verwendet werden, wobei das Verfahren die Schritte umfasst:
- Mischen der beiden vorgängig beschriebenen Komponenten,
- Applizieren des vermischten Klebstoffs auf mindestens eine der zu verklebenden Substratoberflächen,
- Fügen der zu verklebenden Substrate innerhalb der Offenzeit,
- Aushärten des Klebstoffs.

Dabei können die beiden Substrate aus dem gleichen oder einem unterschiedlichen Material bestehen.

Aus diesem beschriebenen Verfahren zum Verkleben entsteht ein Artikel, bei welchem der Klebstoff zwei Substrate kraftschlüssig miteinander verbindet. Dieser Artikel ist insbesondere ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels.

Ein weiterer Gegenstand der Erfindung ist ein Artikel erhalten aus dem vorgehend beschriebenen Verfahren zum Verkleben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.

### 1. verwendete Substanzen:

| | |
|---|---|
| Polyisocyanat-1 | modifiziertes Diphenylmethandiisocyanat enthaltend MDI-Carbodiimid-Addukte, bei Raumemperatur flüssig, NCO-Gehalt 28 Gewichts-% (Desmodur® CD von Bayer) |
| Polyisocyanat-2 | modifiziertes Diphenylmethandiisocyanat enthaltend MDI-Carbodiimid-Addukte, bei Raumemperatur flüssig, NCO-Gehalt 29.4 Gewichts-% (Isonate® M 143 von Dow) |
| Polyisocyanat-3 | dimeres 2,4-Toluylendiisocyanat, Teilchengrösse ca. 5-50 µm, |
| | NCO-Gehalt 24.0 Gewichts-% (Addolink® TT von Rhein Chemie) |
| Polyol | EO-endcapped Polyoxypropylentriol, OH-Zahl 34.7 mg KOH/g (Voranol® CP 4755 von Dow) |
| ***Ald-1*** | Dialdimin aus 1,6-Hexamethylendiamin und 2,2-Dimethyl-3-lauroyloxypropanal, Aminzahl 160 mg KOH/g |
| ***Ald-2)*** | Dialdimin aus 1,6-Hexamethylendiamin und 2,2-Dimethyl-3-(N-morpholino)-propanal, Aminzahl 265 mg KOH/g |
| ***Ald-3*** | Dialdimin aus 1,6-Hexamethylendiamin und 2,2-Dimethyl-3-phenylpropanal, Aminzahl 248 mg KOH/g |
| ***Ald-4*** | Aldimin aus 2-(2-Aminoethoxy)ethanol und 2,2-Dimethyl-3-lauroyl-oxypropanal, Aminzahl 147 mg KOH/g |
| ***Ald-5*** | Dialdimin aus 1,6-Hexamethylendiamin und ***Aldehyd-1***, Aminzahl 423 mg KOH/g |
| ***Ald-6*** | Dialdimin aus Polyoxypropylen-Diamin mit Aminzahl 465 mg KOH/g (Jeffamine® D-230 von Huntsman) und ***Aldehyd-1***, Aminzahl 341.6 mg KOH/g |
| ***Oxa-1*** | Bis-Oxazolidin mit Aminzahl 232 mg KOH/g: Bis-Urethan aus Hexamethylendiisocyanat und 2-Isopropyl-3-(2-hydroxyethyl)oxazolidin (Hardener OZ von Bayer) |
| ***Ket-1*** | Diketimin aus 1,6-Hexamethylendiamin und 4-Methyl-pentan-2-on, Aminzahl 396 mg KOH/g |
| Polyether-Diamin | Polyoxypropylen-Diamin, Aminzahl 248 mg KOH/g (Jeffamine® D-400 von Huntsman) |
| MXDA | 1,3-Bis-(aminomethyl)benzol |
| Kieselsäure | pyrogene Kieselsäure, hydrophob modifiziert |
| ***Bi-1*** | Bismut(III)-carboxylat, Bismut-Gehalt 12.0 Gewichts-% (K-Kat® XC-C227 von King Industries) |
| ***Bi-2*** | Bismut(III)-carboxylat, Bismut-Gehalt 20.0 Gewichts-% (K-Kat® XC-B221 von King Industries) |
| ***Bi-3*** | Bismut(III)-carboxylat, Bismut-Gehalt 25.0 Gewichts-% (K-Kat® 348 von King Industries) |
| ***Bi-4*** | Bismut(III)-neodecanoat-oxinat in Neodecansäure/Diisodecylphthalat, Bismut-Gehalt 5.8 Gewichts-% |
| ***Bi-5*** | Bismut(III)-tris(N,N-diethyl-3-oxo-butanamidat) in Neodecansäure, Bismut-Gehalt 9.3 Gewichts-% |
| ***Bi-6*** | Bismut(III)-tris(neodecanoat) in Neodecansäure, Bismut-Gehalt 16.0 Gewichts-% (Coscat® 83 von Erbslöh); |
| ***Zr-1*** | Zirkonium-Chelat-Komplex in Reaktivverdünner und tert.Butylacetat, Zirkonium-Gehalt 3.5 Gewichts-% (K-Kat® A-209 von King Industries) |
| ***Zr-2*** | Zirkonium(IV)-tetrakis(1,3-diphenylpropan-1,3-dionat) in Tetraethylenglykoldimethylether/Acetylaceton, Zirkonium-Gehalt 1.8 Gewichts-% |
| ***DABCO*** | 1,4-Diazabicyclo[2.2.2]octan, 33.0 Gewichts-% in Dipropylenglykol (DABCO 33 LV® von Air Products) |
| ***DBTDL*** | Dibutylzinndilaurat in Diisodecylphthalat, Zinn-Gehalt 1.9 Gewichts-% (von Sigma-Aldrich) |
| ***Sn-1*** | Zinn(II)-2-ethylhexanoat, Zinn-Gehalt 28.0 Gewichts-% (von Sigma-Aldrich) |
| ***Zn-1*** | Zink(II)-2-ethylhexanoat, Zink-Gehalt 22.0 Gewichts-% (von Alpha Aesar) |
| ***Ti-1*** | Titan(IV)-bis(ethylacetoacetato)-diisobutylat, Titan-Gehalt 9.9 Gewichts-% (Tyzor® IBAY von Du Pont/ Dorf Ketal) |

Der ***Aldehyd-1*** wurde hergestellt wie in EP 2 030 965 in Beispiel 2 beschrieben. Er enthielt grösstenteils 3-Bis(2-hydroxypropyl)amino-2,2-dimethylpropanal.

***Bi-4*** wurde hergestellt, indem 1.25 g ***Bi-6*** und eine Lösung von 0.44 g 8-Hydroxychinolin in 3.27 Diisodecylphtalat vermischt, unter Rühren 2 Stunden auf 80 °C erwärmt und anschliessend abgekühlt wurden.

***Bi-5*** wurde hergestellt, indem 7.75 g ***Bi-6*** und 2.85 g N,N-Diethyl-3-oxobutanamid vermischt, unter Rühren 2 Stunden auf 80 °C erwärmt und anschliessend abgekühlt wurden.

***Zr-2*** wurde hergestellt, indem 9.36 g Zirkonium(IV)-tetrakis(isopropoxid) 70%ig in Isopropanol und 17.94 g 1,3-Diphenyl-1,3-propandion vermischt, 2 Stunden bei 25 °C gerührt, anschliessend im Vakuum von den flüchtigen Bestandteilen befreit und der erhaltende Feststoff schliesslich in einer Mischung aus 40 g Tetraethylenglykoldimethylether und 40 g Acetylaceton gelöst wurde.

Die ***Thixotropierpaste*** wurde hergestellt, indem in einem Vakuummischer 3000 g Diisodecylphthalat und 480 g 4,4'-Methylendiphenyldiisocyanat (Desmodur® 44 MC L, Bayer) vorgelegt und leicht aufgewärmt und anschliessend unter starkem Rühren und langsamem Zutropfen mit 270 g Monobutylamin versetzt wurden. Die entstehende Paste wurde unter Vakuum und Kühlung eine Stunde weitergerührt.

Das ***Polymer-1*** wurde hergestellt, indem 1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 600 g 4,4'-Methylendiphenyldiisocyanat (Desmodur® 44 MC L, Bayer) und 500 g Diisodecylphthalat nach bekanntem Verfahren bei 80 °C zu einem NCO-terminierten Polyurethanpolymer mit einem Gehalt an freien Isocyanat-Gruppen von 2.05 Gewichts-% umgesetzt wurden.

### 2. Herstellung von Polyurethan-Zusammensetzungen

Für jede Zusammensetzung wurden die in den Tabellen 1 bis 8 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Paste verarbeitet und aufbewahrt. Ebenso wurden die in den Tabellen 1 bis 8 angegebenen Inhaltsstoffe der zweiten Komponente ("Komponente-2") verarbeitet und aufbewahrt. Anschliessend wurden die beiden Komponenten mittels des Zentrifugalmischers unter Feuchtigkeitsausschluss zu einer homogenen Paste verarbeitet und diese unverzüglich folgendermassen geprüft:
Als Mass für die Offenzeit wurde die Zeit bis zur Klebefreiheit **("tack-free time")** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde die Zusammensetzung auf eine PTFE-beschichteten Folie zu einem Film von 2 mm Dicke ausgegossen bzw. verpresst, falls die Zusammensetzung nicht selbstverlaufend war, dieser während 7 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0.5-5 % Dehnung) geprüft. Dabei dienen die Werte des E-Moduls und der Zugfestigkeit als Mass für die Festigkeit der Zusammensetzung.

Die **Blasenbildung** wurde visuell am selben Film beurteilt.

Als "mEq Bi / Eq NCO" bzw. "mEq Zr / Eq NCO" wurde das Verhältnis der Anzahl Milliequivalente von Bismut bzw. Zirkonium zur Anzahl NCO-Equivalente in der Zusammensetzung bezeichnet.

Die Resultate sind in den Tabellen 1 bis 8 angegeben.

Bei den Zusammensetzungen ***Z-1*** bis ***Z-34*** handelt es sich um erfindungsgemässe Beispiele. Bei den Zusammensetzungen ***Ref-1*** bis ***Ref-22*** handelt es sich um Vergleichsbeispiele.

**Tabelle 1: Zusammensetzung (in Gewichtsteilen) und Eigenschaften von Z-1 bis Z-7**

| **Zusammensetzung** | ***Z-1*** | ***Z-2*** | ***Z-3*** | ***Z-4*** | ***Z-5*** | ***Z-6*** | ***Z-7*** |
|---|---|---|---|---|---|---|---|
| **Komponente-1**: | | | | | | | |
| Polyol | 90.00 | 90.00 | 90.00 | 90.00 | 93.60 | 93.50 | 96.40 |
| blockiertes Amin | ***Ald-1***, 10.00 | ***Ald-1***, 10.00 | ***Ald-1***, 10.00 | ***Ald-1***, 10.00 | ***Ald-2***, 6.40 | ***Ald-3***, 6.50 | ***Oxa-1***, 3.60 |
| Katalysator | ***Bi-1,*** 0.13 | ***Bi-3,*** 0.07 | ***Bi-4,*** 0.06 | ***Bi-5,*** 0.03 | ***Bi-1,*** 0.10 | ***Bi-1,*** 0.13 | ***Bi-1,*** 0.10 |

| **Komponente-2**: | | | | | | | |
|---|---|---|---|---|---|---|---|
| Polyisocyanat-1 | 13.37 | 13.37 | 13.37 | 13.37 | 13.91 | 13.64 | 14.08 |
| Salicylsäure¹ | 0.20 | 0.20 | 0.20 | 0.20 | 0.20 | 0.20 | 0.20 |
| mEq Bi / Eq NCO | 0.84 | 0.94 | 0.19 | 0.15 | 0.62 | 0.82 | 0.61 |
| tack-free time [min] | 41 | 12 | 34 | 50 | 16 | 50 | 52 |
| Zugfestigkeit [MPa] | 1.22 | 0.87 | 1.36 | 1.4 | 1.5 | 1.5 | 1.3 |
| Bruchdehnung [%] | 84 | 71 | 99 | 99 | 95 | 103 | 88 |
| E-Modul [MPa] | 2.5 | 1.8 | 2.6 | 2.7 | 3.3 | 2.9 | 2.3 |
| Blasenbildung | nein | nein | nein | nein | nein | nein | nein |

| | | | | | | | |
|---|---|---|---|---|---|---|---|
| ¹ 5% in Dioctyladipat | | | | | | | |

**Tabelle 2: Zusammensetzung und (in Gewichtstellen) Eigenschaften von Z-8 bis Z-16**

| **Zusammensetzung** | ***Z-8*** | ***Z-9*** | ***Z-10*** | ***Z-11*** | ***Z-12*** | ***Z-13*** | ***Z-14*** | ***Z-15*** | ***Z-16*** |
|---|---|---|---|---|---|---|---|---|---|
| **Komponente-1**: | | | | | | | | | |
| Polyol | 90.00 | 90.00 | 90.00 | 90.00 | 90.00 | 93.05 | 93.05 | 93.05 | 93.50 |
| blockiertes Amin | ***Ald-1***, 10.00 | ***Ald-1***, 10.00 | ***Ald-1***, 10.00 | ***Ald-1***, 10.00 | ***Ald-1***, 10.00 | ***Ald-2***, 6.95 | ***Ald-2***, 6.95 | ***Ald-2***, 6.95 | ***Ald-3***, 6.50 |
| Wasser | 0.40 | 0.40 | 0.40 | 0.40 | 0.40 | 0.40 | 0.40 | 0.40 | 0.26 |

| **Komponente-2**: | | | | | | | | | |
|---|---|---|---|---|---|---|---|---|---|
| Polyisocyanat-1 | 13.37 | 13.37 | 13.37 | 13.37 | 13.37 | 13.67 | 13.67 | 13.67 | 13.64 |
| Katalysator | ***Bi-1,*** 0.28 | ***Bi-2,*** 0.17 | ***Bi-3,*** 0.13 | ***Bi-4,*** 0.39 | ***Bi-5,*** 0.12 | ***Bi-1,*** 0.09 | ***Bi-4,*** 0.06 | ***Bi-5,*** 0.17 | ***Bi-1,*** 0.13 |
| Salicylsäure ¹ | 0.20 | 0.20 | 0.20 | 0.20 | 0.20 | 0.20 | 0.20 | 0.20 | 0.20 |
| mEq Bi / Eq NCO | 1.80 | 1.83 | 1.74 | 1.21 | 0.60 | 0.57 | 0.18 | 0.83 | 0.82 |
| tack-free time [min] | 20 | 17 | 22 | 19 | 26 | 26 | 20 | 9 | 70 |
| Zugfestigkeit [MPa] | 1.7 | 1.5 | 1.3 | 1.5 | 1.8 | 1.7 | 1.8 | 2.1 | 1.4 |
| Bruchdehnung [%] | 104 | 92 | 72 | 77 | 102 | 123 | 118 | 133 | 97 |
| E-Modul [MPa] | 5.1 | 4.5 | 4.4 | 5.1 | 6.1 | 3.1 | 3.3 | 4.5 | 2.9 |
| Blasenbildung | nein | nein | nein | nein | nein | nein | nein | nein | nein |

| | | | | | | | | | |
|---|---|---|---|---|---|---|---|---|---|
| ¹ 5% in Dioctyladipat | | | | | | | | | |

**Tabelle 3: Zusammensetzung (in Gewichtsteilen) und Eigenschaften von Z-17 bis Z-25**

| ***Zusammensetzung*** | ***Z-17*** | ***Z-18*** | ***Z-19*** | ***Z-20*** | ***Z-21*** | ***Z-22*** | ***Z-23*** | ***Z-24*** | ***Z-25*** |
|---|---|---|---|---|---|---|---|---|---|
| **Komponente-1**: | | | | | | | | | |
| Polyol | 90.00 | 90.00 | 93.60 | 93.60 | 93.60 | 93.50 | 93.50 | 96.40 | 96.40 |
| Katalysator | ***Zr-1,*** 0.61 | ***Zr-2,*** 0.86 | ***Zr-1,*** 0.57 | ***Zr-2,*** 0.86 | - | ***Zr-2,*** 0.82 | - | ***Zr-1,*** 0.58 | ***Zr-2,*** 0.89 |
| blockiertes Amin | - | - | ***Ald-2***, 6.40 | ***Ald-2***, 6.40 | ***Ald-2***, 6.40 | - | ***Ald-3***, 6.50 | ***Oxa-1***, 3.60 | *Oxa-1,* 3.60 |
| Salicylsäure ¹ | 0.20 | 0.20 | 0.20 | 0.20 | 0.20 | 0.20 | 0.20 | 0.20 | 0.20 |
| Wasser | - | - | - | - | 0.40 | - | 0.40 | - | - |

| **Komponente-2**: | | | | | | | | | |
|---|---|---|---|---|---|---|---|---|---|
| Polyisocyanat-1 | 13.37 | 13.37 | 13.64 | 13.64 | 13.67 | 13.64 | 13.64 | 14.08 | 14.08 |
| blockiertes Amin | ***Ald-1***, 10.00 | ***Ald-1***, 10.00 | - | - | - | ***Ald-3***, 6.50 | - | - | - |
| Katalysator | - | | | | ***Zr-2,*** 0.85 | | ***Zr-2,*** 1.1 | - | |
| mEq Zr/Eq NCO | 2.63 | 1.90 | 2.41 | 1.87 | 1.85 | 1.78 | 2.4 | 2.37 | 1.87 |
| tack-free time [min] | 39 | 62 | 18 | 21 | 18 | 30 | 30 | 25 | 30 |
| Zugfestigkeit [MPa] | 1.1 | 1.5 | 1.3 | 1.2 | 1.8 | 1.8 | 1.7 | 1.0 | 1.0 |
| Bruchdehnung [%] | 85 | 104 | 78 | 66 | 123 | 103 | 96 | 43 | 44 |
| E-Modul [MPa] | 2.3 | 2.8 | 3.0 | 2.7 | 3.5 | 3.6 | 4.0 | 2.9 | 2.9 |
| Blasenbildung | nein | nein | nein | nein | nein | nein | nein | nein | nein |

| | | | | | | | | | |
|---|---|---|---|---|---|---|---|---|---|
| ¹ 5% in Dioctyladipat | | | | | | | | | |

**Tabelle 4: Zusammensetzung (in Gewichtsteilen) und Eigenschaften von Ref-1 bis Ref-7**

| **Zusammensetzung** | ***Ref-1*** | ***Ref-2*** | ***Ref-3*** | ***Ref-4*** | ***Ref-5*** | ***Ref-6*** | ***Ref-7*** |
|---|---|---|---|---|---|---|---|
| **Komponente-1**: | | | | | | | |
| Polyol | 90.00 | 90.00 | 96.40 | 90.00 | 90.00 | 96.40 | 90.00 |
| blockiertes Amin | ***Ald-1***, 10.00 | ***Ald-1***, 10.00 | ***Oxa-1,*** 3.60 | ***Ald-1***, 10.00 | ***Ald-1***, 10.00 | ***Oxa-1,*** 3.60 | ***Ald-1*,** 10.00 |
| Katalysator | ***DABCO*** 0.23 | ***DABCO*** 0.22 | ***DABCO*** 0.22 | ***DBTDL*** 0.11 | ***DBTDL*** 0.10 | ***DBTDL*** 0.09 | ***Zn-1,*** 0.83 |
| Wasser | - | 0.40 | - | - | 0.40 | - | - |

| **Komponente-2**: | | | | | | | |
|---|---|---|---|---|---|---|---|
| Polyisocyanat-1 | 13.37 | 13.37 | 14.08 | 13.37 | 13.37 | 14.08 | 13.37 |
| Salicylsäure ¹ | 0.20 | 0.20 | 0.20 | 0.20 | 0.20 | 0.20 | 0.20 |
| tack-free time [min] | 30 | 25 | 30 | 14 | 19 | 13 | 35 |
| Zugfestigkeit [MPa] | 0.6 | 0.2 | 0.9 | 0.7 | 0.7 | 1.0 | 0.6 |
| Bruchdehnung [%] | 65 | 52 | 82 | 85 | 80 | 83 | 76 |
| E-Modul [MPa] | 1.1 | 0.4 | 1.8 | 1.3 | 1.2 | 1.9 | 1.2 |
| Blasenbildung | einige | viele² | einige | einige | viele | nein | einige |

| | | | | | | | |
|---|---|---|---|---|---|---|---|
| ¹ 5% in Dioctyladipat ²Schaum | | | | | | | |

**Tabelle 5: Zusammensetzung (in Gewichtsteilen) und Eigenschaften von Ref-8 bis Ref-14**

| **Zusammensetzung** | ***Ref-8*** | ***Ref-9*** | ***Ref-10*** | ***Ref-11*** | ***Ref-12*** | ***Ref-13*** | ***Ref-14*** |
|---|---|---|---|---|---|---|---|
| **Komponente-1**: | | | | | | | |
| Polyol | 90.00 | 90.00 | 100.00 | 100.00 | 95.80 | 95.80 | 95.80 |
| blockiertes Amin | ***Ald-1***, 10.00 | ***Ald-1***, 10.00 | - | - | ***Ket-1,*** 4.20 | ***Ket-1***, 4.20 | ***Ket-1,*** 4.20 |
| Katalysator | ***Sn-1,*** 0.10 | ***Ti-1,*** 1.04 | ***Bi-1,*** 0.12 | ***Zr-1,*** 0.60 | ***Bi-1,*** 0.10 | ***Zr-1,*** 0.60 | ***DBTDL*** 0.09 |

| **Komponente-2**: | | | | | | | |
|---|---|---|---|---|---|---|---|
| Polyisocyanat-1 | 13.37 | 13.37 | 9.77 | 9.77 | 14.04 | 14.04 | 14.04 |
| Salicylsäure ¹ | 0.20 | 0.20 | - | | 0.20 | 0.20 | 0.20 |
| mEq Bi / Eq NCO | - | - | 1.06 | - | 0.61 | - | - |
| mEq Zr/Eq NCO | - | - | - | 3.53 | - | 2.46 | - |
| tack-free time [min] | 10 | 14 | 22 | 20 | 9 | 12 | 4 |
| Zugfestigkeit [MPa] | 0.9 | 0.5 | 0.9 | 0.8 | 1.2 | 1.1 | 1.1 |
| Bruchdehnung [%] | 84 | 98 | 116 | 56 | 99 | 80 | 75 |
| E-Modul [MPa] | 1.6 | 0.7 | 1.3 | 2.0 | 2.0 | 2.1 | 2.2 |
| Blasenbildung | nein | nein | nein | nein | nein | nein | nein |

| | | | | | | | |
|---|---|---|---|---|---|---|---|
| ¹ 5% in Dioctyladipat | | | | | | | |

Aus den Vergleichs-Zusammensetzungen ***Ref-12*** bis ***Ref-14*** ist ersichtlich, dass mit dem Diketimin ***Ket-1*** keine erhöhten Festigkeiten mit dem Bismut- und dem Zirkonium-Katalysator im Vergleich zum konventionellen Zinnkatalysator ***DBTDL*** erhalten wurden.

**Tabelle 6: Zusammensetzung (in Gewichtsteilen) und Eigenschaften von Z-26 bis Z-28 und Ref-15 bis Ref-16**

| **Zusammensetzung** | ***Z-26*** | ***Z-27*** | ***Ref-15*** | ***Z-28*** | ***Ref-16*** |
|---|---|---|---|---|---|
| **Komponente-1**: | | | | | |
| Polyol | 75.30 | 75.30 | 75.30 | 91.28 | 112.90 |
| blockiertes Amin | ***Ald-1***, 8.54 | ***Ald-1***, 8.54 | ***Ald-1***, 8.54 | - | - |
| Katalysator | - | - | ***DABCO,*** 0.26 | ***Bi-1,*** 0.13 | ***Bi-1,*** 0.18 |
| *Thixotropierpaste* | 10.0 | 10.0 | 10.0 | - | - |
| Kreide | 37.0 | 37.0 | 37.0 | - | - |

| **Komponente-2:** | | | | | |
|---|---|---|---|---|---|
| Polyisocyanat-1 | 10.00 | 10.00 | 10.00 | 10.00 | 10.00 |
| *Polymer-1* | 14.00 | 14.00 | 14.00 | 14.00¹ | 14.00 |
| blockiertes Amin | - | - | - | ***Ald-4*,** 2.48 ² | - |
| Katalysator | ***Bi-1,*** 0.17 | ***Zr-1,*** 0.99 | - | - | - |
| Kieselsäure | 1.00 | 1.00 | 1.00 | - | - |
| Salicylsäure¹ | 0.20 | 0.20 | 0.20 | 0.20 | - |
| mEq Bi / Eq NCO | 1.33 | - | - | 1.02 | 1.41 |
| mEq Zr/Eq NCO | - | 5.17 | - | - | - |
| tack-free time [min] | 15 | 26 | 21 | 41 | 14 |
| Zugfestigkeit [MPa] | 1.8 | 1.4 | 1.1 | 0.9 | 0.8 |
| Bruchdehnung [%] | 172 | 129 | 91 | 81 | 99 |
| E-Modul [MPa] | 2.8 | 2.5 | 2.3 | 1.7 | 1.4 |
| Blasenbildung | nein | nein | nein | nein | nein |

| | | | | | |
|---|---|---|---|---|---|
| ¹ 5% in Dioctyladipat ² Das *Polymer-1* und ***Ald-4*** wurden separat vermischt, während 1h bei 60 °C belassen, auf 25 °C abgekühlt und dann verwendet. | | | | | |

**Tabelle 7: Zusammensetzung (in Gewichtsteilen) und Eigenschaften von Z-29 bis Z-30 und Ref-17 bis Ref-18**

| **Zusammensetzung** | ***Z-29*** | ***Z-30*** | ***Ref-17*** | ***Ref-18*** |
|---|---|---|---|---|
| **Komponente-1**: | | | | |
| Polyol | 50.44 | 50.44 | 50.44 | 50.44 |
| 1,4-Butandiol | 8.07 | 8.07 | 8.07 | 8.07 |
| blockiertes Amin | ***Ald-1***, 5.00 | ***Ald-1***, 5.00 | ***Ald-1***, 5.00 | ***Ald-1***, 5.00 |
| Katalysator | - | - | ***DABCO*** 0.24 | ***DBTDL,*** 0.33 |
| *MXDA* | 2.02 | 2.02 | 2.02 | 2.02 |
| Molekularsieb² | 4.03 | 4.03 | 4.03 | 4.03 |
| calciniertes Kaolin | 35.37 | 35.37 | 35.37 | 35.37 |
| Wasser | 0.07 | 0.07 | 0.07 | 0.07 |

| **Komponente-2:** | | | | |
|---|---|---|---|---|
| Polyisocyanat-2 | 36.45 | 36.45 | 36.45 | 36.45 |
| *Polymer-1* | 52.14 | 52.14 | 52.14 | 52.14 |
| Katalysator | ***Zr-2,*** 0.35 | ***Bi-5,*** 0.17 | - | - |
| Kieselsäure | 4.92 | 4.92 | 4.92 | 4.92 |
| Salicylsäure¹ | 0.37 | 0.37 | 0.37 | 0.37 |
| mEq Bi / Eq NCO | - | 0.27 | - | - |
| mEq Zr/Eq NCO | 0.25 | - | - | - |
| tack-free time [min] | 13 | 13 | 10 | 18 |
| Zugfestigkeit [MPa] | 10.1 | 10.1 | 9.41 | 9.1 |
| Bruchdehnung [%] | 226 | 212 | 208 | 209 |
| E-Modul [MPa] | 36.4 | 31.3 | 27.7 | 31.3 |
| Blasenbildung | nein | nein | ja | ja |

| | | | | |
|---|---|---|---|---|
| ¹ 5% in Dioctyladipat ² Purmol® 4ST (Zeochem), Porengrösse 4Å | | | | |

Die Zusammensetzungen ***Z-29*** und ***Z-30*** sind besonders geeignet als Strukturklebstoff. Sie sind unmittelbar nach dem Vermischen standfest und verfügen im ausgehärteten Zustand über sehr hohe Festigkeiten bei guter Dehnbarkeit.

**Tabelle 8: Zusammensetzung (in Gewichtsteilen) und Eigenschaften von Z-31 bis Z-34 und Ref-19 bis Ref-22**

| **Zusammensetzung** | ***Z-31*** | ***Z-32*** | ***Ref-19*** | ***Ref-20*** | ***Z-33*** | ***Z-34*** | ***Ref-21*** | ***Ref-22*** |
|---|---|---|---|---|---|---|---|---|
| **Komponente-1**: | | | | | | | | |
| Polyol | 93.00 | 93.00 | 93.00 | 93.00 | 85.00 | 85.00 | 85.00 | 85.00 |
| blockiertes Amin | ***Ald-5*,** 7.00 | ***Ald-5*,** 7.00 | ***Ald-5*,** 7.00 | ***Ald-5*,** 7.00 | ***Ald-6*,** 15.00 | ***Ald-6*** 15.00 | ***Ald-6*,** 15.00 | ***Ald-6*** 15.00 |
| Katalysator | - | - | ***DABCO*** 0.22 | ***DBTDL,*** 0.34 | - | - | ***DABCO*** 0.50 | ***DBTDL,*** 0.40 |
| Salicylsäure ¹ | 0.20 | 0.40 | 0.40 | 0.40 | 0.50 | 0.50 | 0.50 | 0.50 |

| **Komponente-2**: | | | | | | | | |
|---|---|---|---|---|---|---|---|---|
| Polyisocyanat-1 | 21.60 | 21.60 | 21.60 | 21.60 | 30.00 | 30.00 | 30.00 | 30.00 |
| Katalysator | ***Zr-2,*** 0.75 | ***Bi-4,*** 0.05 | - | - | ***Zr-1,*** 1.34 | ***Zr-2,*** 1.27 | - | - |
| | | | | | | | | |
| mEq Bi / Eq NCO | - | 0.10 | - | - | - | - | - | - |
| mEq Zr/Eq NCO | 1.03 | - | - | - | 2.57 | 1.25 | - | - |
| tack-free time [min] | 29 | 8 | 22 | 11 | 10 | 33 | 13 | 21 |
| Zugfestigkeit [MPa] | 2.3 | 2.0 | 1.9 | 1.8 | 4.4 | 3.8 | 3.0 | 3.5 |
| Bruchdehnung [%] | 116 | 92 | 110 | 113 | 173 | 154 | 135 | 174 |
| E-Modul [MPa] | 4.2 | 4.1 | 3.4 | 3.3 | 4.9 | 5.3 | 4.2 | 4.2 |
| Blasenbildung | nein | nein | ja | ja | nein | nein | ja | ja |

| | | | | | | | | |
|---|---|---|---|---|---|---|---|---|
| ¹ 5% in Dioctyladipat | | | | | | | | |

Das in den Zusamensetzungen ***Z-31*** bis ***Z-34*** und ***Ref-19*** bis ***Ref-22*** enthaltene blockierte Amin ***Ald-5*** bzw. ***Ald-6*** setzt bei der Hydrolyse einen zwei OH-Gruppen aufweisenden Aldehyd frei, welcher bei der Aushärtung der Zusammensetzungen durch Reaktion mit vorhandenen Isocyanatgruppen ins Polymer eingebaut werden kann.

### 3. Herstellung von heisshärtenden Zusammensetzungen

Für jede Zusammensetzung wurden die in der Tabelle 9 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Paste verarbeitet und aufbewahrt. Ebenso wurden die in der Tabelle 9 angegebenen Inhaltsstoffe der zweiten Komponente ("Komponente-2") verarbeitet und aufbewahrt. Anschliessend wurden die beiden Komponenten mittels des Zentrifugalmischers unter Feuchtigkeitsausschluss zu einer homogenen Paste verarbeitet und unter Feuchtigkeitsausschluss aufbewahrt.

Zur Aushärtung und Bestimmung der mechanischen Eigenschaften wurde die Zusammensetzung auf einer PTFE-beschichteten Folie in einer beheizbaren Presse zu einem Film von 2 mm Dicke verpresst, 5 Minuten auf 140 °C aufgeheizt und während einer Stunde im Normklima gelagert bzw. abkühlen lassen. Anschliessend wurden **Zugfestigkeit** (Bruchkraft), **Bruchdehnung** und **E-Modul** (bei 0.5-5 % Dehnung) wie für die Polyurethan-Zusammensetzungen beschrieben geprüft.

Als "mEq Bi / Eq NCO" wurde das Verhältnis der Anzahl Milliequivalente von Bismut zur Anzahl NCO-Equivalente in der Zusammensetzung bezeichnet. Die Resultate sind in der Tabelle 9 angegeben.

**Tabelle 9: Zusammensetzung (in Gewichtsteilen) und Eigenschaften von Z-35 bis Z-38.**

| **Zusammensetzung** | ***Z-35*** | ***Z-36*** | ***Z-37*** | ***Z-38*** |
|---|---|---|---|---|
| **Komponente-1**: | | | | |
| Polyol | 33.93 | 33.93 | 33.93 | 31.80 |
| blockiertes Amin | ***Ald-1***, 1.00 | ***Ald-1***, 1.00 | ***Ald-1***, 1.00 | ***Ald-1***, 3.00 |
| Russ | 13.00 | 13.00 | 13.00 | 13.00 |
| calciniertes Kaolin | 24.00 | 24.00 | 24.00 | 24.00 |

| **Komponente-2**: | | | | |
|---|---|---|---|---|
| Polyisocyanat-3 | 5.20 | 5.20 | 5.20 | 6.58 |
| Polyether-Diamin | 1.41 | 1.41 | 1.41 | 1.78 |
| Diisodecylphthalat | 19.07 | 19.07 | 19.07 | 18.25 |
| Kieselsäure | 2.00 | 2.00 | 2.00 | 2.00 |
| Katalysator | ***Bi-4,*** 1.4 | ***Bi-5,*** 1.0 | ***Bi-6,*** 0.47 | ***Bi-6,*** 0.47 |
| Salicylsäure ¹ | 0.25 | 0.25 | 0.25 | 0.25 |
| | | | | |
| mEq Bi / Eq NCO | 16.55 | 18.95 | 15.32 | 12.10 |
| Zugfestigkeit [MPa] | 6.1 | 6.4 | 5.0 | 7.5 |
| Bruchdehnung [%] | 169 | 243 | 210 | 160 |
| E-Modul [MPa] | 13.6 | 10.0 | 12.0 | 16.2 |

| | | | | |
|---|---|---|---|---|
| ¹ 5% in Dioctyladipat | | | | |

## Patentansprüche

1. Zusammensetzung bestehend aus einer ersten und einer zweiten Komponente,
- wobei die erste Komponente mindestens ein Polyol und
- die zweite Komponente mindestens ein Polyisocyanat enthält,
- und wobei die Zusammensetzung weiterhin mindestens ein blockiertes Amin, welches eine Aldiminogruppe, die nicht durch Tautomerisierung in eine Enaminogruppe überführbar ist, sowie mindestens eine weitere Reaktivgruppe ausgewählt aus der Gruppe bestehend aus Oxazolidinogruppen, Aldiminogruppen, Hydroxylgruppen, Mercaptogruppen, primären Aminogruppen, sekundären Aminogruppen und Isocyanatgruppen, aufweist,
- und die Zusammensetzung weiterhin mindestens einen Katalysator ausgewählt aus der Gruppe bestehend aus Bismut(III)-Verbindungen und Zirkonium(IV)-Verbindungen umfasst.

2. Zusammensetzung gemäss Anspruch 1, **dadurch gekennzeichnet, dass** das Polyol ein Polyetherpolyol ist.

3. Zusammensetzung gemäss Anspruch 1 oder 2, **dadurch gekennzeichnet, dass** das Polyol primäre Hydroxylgruppen aufweist.

4. Zusammensetzung gemäss einem der Ansprüche 1 bis 3, **dadurch gekennzeichnet, dass** das Polyisocyanat ausgewählt ist aus der Gruppe bestehend aus 4,4'-, 2,4'- und 2,2'-Diphenylmethandiisocyanat und beliebigen Gemischen dieser Isomeren, 2,4- und 2,6-Toluylendiisocyanat und beliebigen Gemischen dieser Isomeren, 1,6-Hexamethylendiisocyanat und 1-Isocyanato-3,3,5-trimethyl-5-isocyanatomethyl-cyclohexan, Oligomere, Polymere und Derivate der genannten Isocyanate und auf den genannten Isocyanaten basierende Isocyanatgruppen aufweisenden Polyurethanpolymere, sowie Mischungen davon.

5. Zusammensetzung gemäss einem der Ansprüche 1 bis 4, **dadurch gekennzeichnet, dass** das blockierte Amin mindestens eine Aldiminogruppe aufweist und auf einem Amin ausgewählt aus der Gruppe bestehend aus 1,6-Hexamethylendiamin, 1,5-Diamino-2-methylpentan, 1,3-Pentandiamin, 1-Amino-3-aminomethyl-3,5,5-trimethylcyclohexan, 2,2,4- und 2,4,4-Trimethylhexamethylendiamin, 1,3-Bis-(aminomethyl)benzol, 1,3-Bis-(aminomethyl)cyclohexan, 1,4-Bis-(aminomethyl)cyclohexan, Bis-(4-aminocyclohexyl)methan, Bis-(4-amino-3-methylcyclohexyl)methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan, 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)ethanol, Triethylenglykol-monoamin, 3-(2-Hydroxyethoxy)propylamin, 3-(2-(2-Hydroxyethoxy)-ethoxy)propylamin und 3-(6-Hydroxyhexyloxy)propylamin, N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)piperidin, N-Cocoalkyl-1,3-propandiamin, N-Oleyl-1,3-propandiamin, N-Soyaalkyl-1,3-propandiamin und N-Talgalkyl-1,3-propandiamin, basiert.

6. Zusammensetzung gemäss einem der Ansprüche 1 bis 5, **dadurch gekennzeichnet, dass** das blockierte Amin an der Aldiminogruppe einen Rest ausgewählt aus der Gruppe bestehend aus Phenyl, 2,2-Dimethylpropyl, 2,2-Dimethyl-3-phenylpropyl, 2,2-Dimethyl-3-acetoxypropyl, 2,2-Dimethyl-3-isobutyroxypropyl, 2,2-Dimethyl-3-caproyloxypropyl, 2,2-Dimethyl-3-benzoyloxypropyl, 2,2-Dimethyl-3-capryloyloxypropyl, 2,2-Dimethyl-3-caprinoyloxypropyl, 2,2-Dimethyl-3-lauroyloxypropyl, 2,2-Dimethyl-3-myristoyloxypropyl, 2,2-Dimethyl-3-palmitoyloxypropyl, 2,2-Dimethyl-3-stearoyloxypropyl, 2,2-Dimethyl-3-dimethylaminopropyl, 2,2-Dimethyl-3-diethylaminopropyl, 2,2-Dimethyl-3-dibutylaminopropyl, 2,2-Dimethyl-3-(N-pyrrolidino)propyl, 2,2-Dimethyl-3-(N-piperidino)propyl, 2,2-Dimethyl-3-(N-morpholino)propyl, 2,2-Dimethyl-3-(N-(2,6-dimethyl)morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethylamino)propyl, 2,2-Dimethyl-3-(N-benzylisopropylamino)propyl, 2,2-Dimethyl-3-(N-methylcyclohexylamino)propyl, 2,2-Dimethyl-3-bis-(2-methoxyethyl)amino-propyl, 2,2-Dimethyl-3-bis(2-hydroxyethyl)amino-propyl und 2,2-Dimethyl-3-bis(2-hydroxypropyl)amino-propyl aufweist.

7. Zusammensetzung gemäss einem der Ansprüche 1 bis 6, **dadurch gekennzeichnet, dass** der Katalysator mindestens einen Liganden ausgewählt aus der Gruppe bestehend aus Alkoholaten, Carboxylaten, 1,3-Diketonaten, 1,3-Ketoesteraten, Oxinaten und 1,3-Ketoamidaten aufweist.

8. Zusammensetzung gemäss Anspruch 7, **dadurch gekennzeichnet, dass** der Katalysator mindestens einen Liganden ausgewählt aus der Gruppe bestehend aus 1,3-Diketonaten, 1,3-Ketoesteraten, Oxinaten und 1,3-Ketoamidaten aufweist.

9. Zusammensetzung gemäss einem der Ansprüche 1 bis 8, **dadurch gekennzeichnet, dass** der Katalysator eine Zirkonium(IV)-Komplexverbindung darstellt.

10. Zusammensetzung gemäss Anspruch 9, **dadurch gekennzeichnet, dass** die Zirkonium(IV)-Komplexverbindung ausgewählt ist aus der Gruppe bestehend aus Zirkonium(IV)-tetrakis(acetat), Zirkonium(IV)-tetrakis(octanoat), Zirkonium(IV)-tetrakis(2-ethylhexanoat), Zirkonium(IV)-tetrakis(neodecanoat), Zirkonium(IV)-tetrakis(acetylacetonat), Zirkonium(IV)-tetrakis(1,3-diphenylpropan-1,3-dionat), Zirkonium(IV)-tetrakis(ethylacetoacetat), Zirkonium(IV)-tetrakis(N,N-diethyl-3-oxo-butanamidat) und Zirkonium(IV)-Komplexverbindungen mit verschiedenen dieser genannten Liganden.

11. Zusammensetzung gemäss einem der Ansprüche 1 bis 10, **dadurch gekennzeichnet, dass** sie als Bestandteil der ersten Komponente zusätzlich mindestens ein Diol mit zwei primären Hydroxylgruppen und einem Molekulargewicht im Bereich von 60 bis 150 g/mol enthält.

12. Zusammensetzung gemäss einem der Ansprüche 1 bis 11, **dadurch gekennzeichnet, dass** das blockierte Amin in der Zusammensetzung in einer solchen Menge vorliegt, dass die Anzahl seiner reaktiven Gruppen inklusive blockierte Aminogruppen gegenüber der Anzahl OH-Gruppen des Polyols und weiterer in der Zusammensetzung gegebenenfalls vorhandener Alkohole im Bereich von 0.01 bis 10 liegt.

13. Zusammensetzung gemäss einem der Ansprüche 1 bis 12, **dadurch gekennzeichnet, dass** sie als Bestandteil der ersten Komponente zusätzlich Wasser oder eine Wasser erzeugende Substanz enthält.

14. Verfahren zum Verkleben von einem ersten Substrat mit einem zweiten Substrat, welches die Schritte umfasst:
- Mischen der beiden Komponenten einer Zusammensetzung gemäss einem der Ansprüche 1 bis 13,
- Applizieren der vermischten Zusammensetzung auf mindestens eine der zu verklebenden Substratoberflächen,
- Fügen der zu verklebenden Substrate innerhalb der Offenzeit,
- Aushärten der Zusammensetzung.

15. Artikel erhalten aus einem Verfahren zum Verkleben gemäss Anspruch 14.

## Claims

1. Composition consisting of a first and a second component,
- wherein the first component contains at least one polyol and
- the second component contains at least one polyisocyanate,
- and wherein the composition additionally contains at least one blocked amine which has an aldimino group that cannot be converted to an enamino group by tautomerization, and also at least one further reactive group selected from the group consisting of oxazolidino groups, aldimino groups, hydroxyl groups, mercapto groups, primary amino groups, secondary amino groups and isocyanate groups,
- and the composition additionally comprises at least one catalyst selected from the group consisting of bismuth(III) compounds and zirconium(IV) compounds.

2. Composition according to Claim 1, **characterized in that** the polyol is a polyether polyol.

3. Composition according to Claim 1 or 2, **characterized in that** the polyol has primary hydroxyl groups.

4. Composition according to one of Claims 1 to 3, **characterized in that** the polyisocyanate is selected from the group consisting of 4,4'-, 2,4'- and 2,2'-diphenylmethane diisocyanate and any mixtures of these isomers, 2,4- and 2,6-tolylene diisocyanate and any mixtures of these isomers, 1,6-hexamethylene diisocyanate and 1-isocyanato-3,3,5-trimethyl-5-isocyanatomethyl-cyclohexane, oligomers, polymers and derivatives of the isocyanates mentioned and polyurethane polymers containing isocyanate groups and based on the isocyanates mentioned, and also mixtures thereof.

5. Composition according to one of Claims 1 to 4, **characterized in that** the blocked amine has at least one aldimino group and is based on an amine selected from the group consisting of 1,6-hexamethylenediamine, 1,5-diamino-2-methylpentane, 1,3-pentane-diamine, 1-amino-3-aminomethyl-3,5,5-trimethylcyclohexane, 2,2,4- and 2,4,4-trimethylhexamethylene-diamine, 1,3-bis-(aminomethyl)benzene, 1,3-bis-(aminomethyl)-cyclohexane, 1,4-bis-(aminomethyl)cyclohexane, bis-(4-aminocyclohexyl)methane, bis-(4-amino-3-methylcyclohexyl)methane, 3(4),8(9)-bis-(aminomethyl)-tricyclo[5.2.1.0^{2,6}]decane, 1,2-, 1,3- and 1,4-diaminocyclohexane, 1,4-diamino-2,2,6-trimethylcyclohexane, 3,6-dioxaoctane-1,8-diamine, 4,7-dioxadecane-1,10-diamine, 4-aminomethyl-1,8-octanediamine, polyoxyalkylene-polyamines with two or three amino groups and a molecular weight of up to 600 g/mol, 1,3- and 1,4-phenylenediamine, 2,4- and 2,6-tolylenediamine, 4,4'-, 2,4'- and 2,2'-diaminodiphenylmethane, 3,3'-dichloro-4,4'-diaminodiphenylmethane, 5-amino-1-pentanol, 6-amino-1-hexanol, 4-(2-aminoethyl)-2-hydroxyethylbenzene, 3-aminomethyl-3,5,5-trimethyl-cyclohexanol, 2-(2-aminoethoxy)-ethanol, triethylene glycol-monoamine, 3-(2-hydroxyethoxy)propylamine, 3-(2-(2-hydroxyethoxy)-ethoxy)propylamine and 3-(6-hydroxyhexyloxy)-propylamine, N-methyl-1,2-ethanediamine, N-ethyl-1,2-ethanediamine, N-cyclohexyl-1,2-ethanediamine, N-methyl-1,3-propanediamine, N-ethyl-1,3-propanediamine, N-butyl-1,3-propanediamine, N-cyclohexyl-1,3-propanediamine, 4-aminomethyl-piperidine, 3-(4-aminobutyl)piperidine, N-coco alkyl-1,3-propanediamine, N-oleyl-1,3-propanediamine, N-soya alkyl-1,3-propanediamine and N-tallow alkyl-1,3-propanediamine.

6. Composition according to one of Claims 1 to 5, **characterized in that** the blocked amine on the aldimino group has a radical selected from the group consisting of phenyl, 2,2-dimethylpropyl, 2,2-dimethyl-3-phenylpropyl, 2,2-dimethyl-3-acetoxypropyl, 2,2-dimethyl-3-isobutyroxypropyl, 2,2-dimethyl-3-caproyloxypropyl, 2,2-dimethyl-3-benzoyloxypropyl, 2,2-dimethyl-3-capryloyloxypropyl, 2,2-dimethyl-3-caprinoyloxypropyl, 2,2-dimethyl-3-lauroyloxypropyl, 2,2-dimethyl-3-myristoyloxypropyl, 2,2-dimethyl-3-palmitoyloxypropyl, 2,2-dimethyl-3-stearoyloxypropyl, 2,2-dimethyl-3-dimethylaminopropyl, 2,2-dimethyl-3-diethylaminopropyl, 2,2-dimethyl-3-dibutylaminopropyl, 2,2-dimethyl-3-(N-pyrrolidino)propyl, 2,2-dimethyl-3-(N-piperidino)-propyl, 2,2-dimethyl-3-(N-morpholino)propyl, 2,2-dimethyl-3-(N-(2,6-dimethyl)morpholino)propyl, 2,2-dimethyl-3-(N-(4-methylpiperazino))propyl, 2,2-dimethyl-3-(N-(4-ethylpiperazino))propyl, 2,2-dimethyl-3-(N-benzylmethylamino)propyl, 2,2-dimethyl-3-(N-benzylisopropylamino)propyl, 2,2-dimethyl-3-(N-methylcyclohexylamino)propyl, 2,2-dimethyl-3-bis-(2-methoxyethyl)amino-propyl, 2,2-dimethyl-3-bis(2-hydroxyethyl)amino-propyl and 2,2-dimethyl-3-bis(2-hydroxypropyl)amino-propyl.

7. Composition according to one of Claims 1 to 6, **characterized in that** the catalyst has at least one ligand selected from the group consisting of alcoholates, carboxylates, 1,3-diketonates, 1,3-ketoesterates, oxinates and 1,3-ketoamidates.

8. Composition according to Claim 7, **characterized in that** the catalyst has at least one ligand selected from the group consisting of 1,3-diketonates, 1,3-ketoesterates, oxinates and 1,3-ketoamidates.

9. Composition according to one of Claims 1 to 8, **characterized in that** the catalyst is a zirconium(IV) complex.

10. Composition according to Claim 9, **characterized in that** the zirconium(IV) complex is selected from the group consisting of zirconium(IV)-tetrakis(acetate), zirconium(IV)-tetrakis(octanoate), zirconium(IV)-tetrakis(2-ethylhexanoate), zirconium(IV)-tetrakis-(neodecanoate), zirconium(IV)-tetrakis(acetylacetonate), zirconium(IV)-tetrakis(1,3-diphenylpropane-1,3-dionate), zirconium(IV)-tetrakis(ethyl acetoacetate), zirconium(IV)-tetrakis(N,N-diethyl-3-oxo-butanamidate) and zirconium(IV) complexes with various ones of these ligands mentioned.

11. Composition according to one of Claims 1 to 10, **characterized in that** as a constituent of the first component it additionally contains at least one diol with two primary hydroxyl groups and a molecular weight in the range of 60 to 150 g/mol.

12. Composition according to one of Claims 1 to 11, **characterized in that** the blocked amine is present in the composition in such a quantity that the number of its reactive groups including blocked amino groups relative to the number of OH groups of the polyol and further alcohols that may be present in the composition is in the range of 0.01 to 10.

13. Composition according to one of Claims 1 to 12, **characterized in that** as a constituent of the first component it additionally contains water or a water-generating substance.

14. Method for bonding a first substrate with a second substrate, which comprises the steps of:
- mixing the two components of a composition according to one of Claims 1 to 13,
- applying the mixed composition to at least one of the substrate surfaces to be bonded,
- joining the substrates to be bonded within the open time,
- curing the composition.

15. Article obtained from a method for bonding according to Claim 14.

## Revendications

1. Composition constituée par un premier et un deuxième composant,
- le premier composant contenant au moins un polyol et
- le deuxième composant contenant au moins un polyisocyanate,
- et la composition comprenant en outre au moins une amine bloquée, qui comprend un groupe aldimino, qui ne peut pas être transformé en un groupe énamino par tautomérisation, ainsi qu'au moins un groupe réactif supplémentaire choisi dans le groupe constitué par les groupes oxazolidino, les groupes aldimino, les groupes hydroxyle, les groupes mercapto, les groupes amino primaires, les groupes amino secondaires et les groupes isocyanate,
- et la composition comprenant en outre au moins un catalyseur choisi dans le groupe constitué par les composés de bismuth(III) et les composés de zirconium(IV).

2. Composition selon la revendication 1, **caractérisée en ce que** le polyol est un polyéther-polyol.

3. Composition selon la revendication 1 ou 2, **caractérisée en ce que** le polyol comprend des groupes hydroxyle primaires.

4. Composition selon l'une quelconque des revendications 1 à 3, **caractérisée en ce que** le polyisocyanate est choisi dans le groupe constitué par le diisocyanate de 4,4'-, 2,4'- et 2,2'-diphénylméthane et les mélanges quelconques de ces isomères, le diisocyanate de 2,4- et 2,6-toluylène et les mélanges quelconques de ces isomères, le diisocyanate de 1,6-hexaméthylène et le 1-isocyanato-3,3,5-triméthyl-5-isocyanatométhyl-cyclohexane, les oligomères, les polymères et les dérivés des isocyanates mentionnés et les polymères de polyuréthane comprenant des groupes isocyanate à base des isocyanates mentionnés, ainsi que les mélanges de ceux-ci.

5. Composition selon l'une quelconque des revendications 1 à 4, **caractérisée en ce que** l'amine bloquée comprend au moins un groupe aldimino et est à base d'une amine choisie dans le groupe constitué par la 1,6-hexaméthylène-diamine, le 1,5-diamino-2-méthylpentane, la 1,3-pentane-diamine, le 1-amino-3-aminométhyl-3,5,5-triméthylcyclohexane, la 2,2,4- et 2,4,4-triméthylhexaméthylène-diamine, le 1,3-bis-(aminométhyl)benzène, le 1,3-bis-(aminométhyl)cyclohexane, le 1,4-bis-(aminométhyl)cyclohexane, le bis-(4-aminocyclohexyl)méthane, le bis-(4-amino-3-méthylcyclohexyl)méthane, le 3(4),8(9)-bis-(aminométhyl)-tricyclo[5.2.1.0^{2,6}]décane, le 1,2-, 1,3- et 1,4-diaminocyclohexane, le 1,4-diamino-2,2,6-triméthylcyclohexane, la 3,6-dioxaoctane-1,8-diamine, la 4,7-dioxadécane-1,10-diamine, la 4-aminométhyl-1,8-octane-diamine, les polyoxyalkylène-polyamines munies de deux ou trois groupes amino et ayant un poids moléculaire de jusqu'à 600 g/mol, la 1,3- et 1,4-phénylène-diamine, la 2,4- et 2,6-toluylène-diamine, le 4,4'-, 2,4'- et 2,2'-diaminodiphénylméthane, le 3,3'-dichloro-4,4'-diaminodiphénylméthane, le 5-amino-1-pentanol, le 6-amino-1-hexanol, le 4-(2-aminoéthyl)-2-hydroxyéthylbenzène, le 3-aminométhyl-3,5,5-triméthyl-cyclohexanol, le 2-(2-aminoéthoxy)éthanol, la triéthylène-glycol-monoamine, la 3-(2-hydroxyéthoxy)propylamine, la 3-(2-(2-hydroxyéthoxy)-éthoxy)propylamine et la 3-(6-hydroxyhexyloxy)propylamine, la N-méthyl-1,2-éthane-diamin, la N-éthyl-1,2-éthane-diamine, la N-cyclohexyl-1,2-éthane-diamine, la N-méthyl-1,3-propane-diamine, la N-éthyl-1,3-propane-diamine, la N-butyl-1,3-propane-diamine, la N-cyclohexyl-1,3-propane-diamine, la 4-aminométhyl-pipéridine, la 3-(4-aminobutyl)pipéridine, la N-alkyle de coco-1,3-propane-diamine, la N-oléyl-1,3-propane-diamine, la N-alkyle de soja-1,3-propane-diamine et la N-alkyle de suif-1,3-propane-diamine.

6. Composition selon l'une quelconque des revendications 1 à 5, **caractérisée en ce que** l'amine bloquée comprend sur le groupe aldimino un radical choisi dans le groupe constitué par phényle, 2,2-diméthylpropyle, 2,2-diméthyl-3-phénylpropyle, 2,2-diméthyl-3-acétoxypropyle, 2,2-diméthyl-3-isobutyroxypropyle, 2,2-diméthyl-3-caproyloxypropyle, 2,2-diméthyl-3-benzoyloxypropyle, 2,2-diméthyl-3-capryloyloxypropyle, 2,2-diméthyl-3-caprinoyloxypropyle, 2,2-diméthyl-3-lauroyloxypropyle, 2,2-diméthyl-3-myristoyloxypropyle, 2,2-diméthyl-3-palmitoyloxypropyle, 2,2-diméthyl-3-stearoyloxypropyle, 2,2-diméthyl-3-diméthylaminopropyle, 2,2-diméthyl-3-diéthylaminopropyle, 2,2-diméthyl-3-dibutylaminopropyle, 2,2-diméthyl-3-(N-pyrrolidino)propyle, 2,2-diméthyl-3-(N-pipéridino)propyle, 2,2-diméthyl-3-(N-morpholino)propyle, 2,2-diméthyl-3-(N-(2,6-diméthyl)morpholino)propyle, 2,2-diméthyl-3-(N-(4-méthylpipérazino))propyle, 2,2-diméthyl-3-(N-(4-éthylpipérazino))propyle, 2,2-diméthyl-3-(N-benzylméthylamino)propyle, 2,2-diméthyl-3-(N-benzylisopropylamino)propyle, 2,2-diméthyl-3-(N-méthylcyclohexylamino)propyle, 2,2-diméthyl-3-bis-(2-méthoxyéthyl)aminopropyle, 2,2-diméthyl-3-bis(2-hydroxyéthyl)amino-propyle et 2,2-diméthyl-3-bis(2-hydroxypropyl)amino-propyle.

7. Composition selon l'une quelconque des revendications 1 à 6, **caractérisée en ce que** le catalyseur comprend au moins un ligand choisi dans le groupe constitué par les alcoolates, les carboxylates, les 1,3-dicétonates, les 1,3-cétoestérates, les oxinates et les 1,3-cétoamidates.

8. Composition selon la revendication 7, **caractérisée en ce que** le catalyseur comprend au moins un ligand choisi dans le groupe constitué par les 1,3-dicétonates, les 1,3-cétoestérates, les oxinates et les 1,3-cétoamidates.

9. Composition selon l'une quelconque des revendications 1 à 8, **caractérisée en ce que** le catalyseur est un composé de complexe de zirconium(IV).

10. Composition selon la revendication 9, **caractérisée en ce que** le composé de complexe de zirconium(IV) est choisi dans le groupe constitué par le tétrakis(acétate) de zirconium(IV), le tétrakis(octanoate) de zirconium(IV), le tétrakis(2-éthylhexanoate) de zirconium(IV), le tétrakis(néodécanoate) de zirconium(IV), le tétrakis(acétylacétonate) de zirconium(IV), le tétrakis(1,3-diphénylpropane-1,3-dionate) de zirconium(IV), le tétrakis(éthylacétoacétate) de zirconium(IV), le tétrakis(N,N-diéthyl-3-oxo-butanamidate) de zirconium(IV) et les composés de complexes de zirconium(IV) avec divers ligands parmi ces ligands mentionnés.

11. Composition selon l'une quelconque des revendications 1 à 10, **caractérisée en ce qu'**elle contient en outre en tant que constituant du premier composant au moins un diol muni de deux groupes hydroxyle primaires et ayant un poids moléculaire dans la plage allant de 60 à 150 g/mol.

12. Composition selon l'une quelconque des revendications 1 à 11, **caractérisée en ce que** l'amine bloquée est présente dans la composition en une quantité telle que le nombre de ses groupes réactifs y compris les groupes amino bloqués par rapport au nombre de groupes OH du polyol et d'autres alcools éventuellement présents dans la composition se situe dans la plage allant de 0,01 à 10.

13. Composition selon l'une quelconque des revendications 1 à 12, **caractérisée en ce qu'**elle contient en outre en tant que constituant du premier composant de l'eau ou une substance générant de l'eau.

14. Procédé de collage d'un premier substrat avec un deuxième substrat, qui comprend les étapes suivantes :
- le mélange des deux composants d'une composition selon l'une quelconque des revendications 1 à 13,
- l'application de la composition mélangée sur au moins une des surfaces de substrat à coller,
- l'assemblage des substrats à coller pendant le temps d'ouverture,
- le durcissement de la composition.

15. Article obtenu par un procédé de collage selon la revendication 14.
